# FASCICULE DE BREVET EUROPEEN

(11) **EP 2 654 945 B1**
(45) Date de publication et mention de la délivrance du brevet: **21.08.2019**
(21) Numéro de dépôt: 11808893.9
(22) Date de dépôt: 15.12.2011
(51) Int. Cl.: B01J 21/12, B01J 23/20, B01J 23/24, B01J 35/00, B01J 35/10, C01B 37/00, C10G 45/04, B01J 37/00, C10G 47/12, B01J 23/882, B01J 23/883

(54) **MATERIAU SPHERIQUE COMPRENANT DES NANOPARTICULES METALLIQUES PIEGEES DANS UNE MATRICE OXYDE MESOSTRUCTUREE ET SON UTILISATION COMME CATALYSEUR DANS LES PROCEDES DU RAFFINAGE D'HYDROCARBURES**
METALLISCHE NANOPARTIKEL ENTHALTENDES SPHAERISCHES MATERIAL IN EINER MESOSTRUKTURIERTEN OXIDMATRIX UND DESSEN VERWENDUNG ALS KATALYSATOR IN VERFAHREN ZUM RAFFINIEREN VON KOHLENWASSERSTOFFEN
SPHERICAL COMPOUND COMPRISING METALLIC NANOPARTICLES WITHIN A MESOSTRUCTURED OXIDIC MATRIX AND THE USE THEREOF AS A CATALYST IN HYDROCARBON REFINING PROCESS

(30) Priorité: 22.12.2010 FR 1005029
(43) Date de publication de la demande: 30.10.2013
(73) Titulaire: IFP Energies nouvelles, 92500 Rueil-Malmaison (FR); Université Pierre et Marie Curie, 75252 Paris Cedex 05 (FR); Centre National de la Recherche Scientifique, 75794 Paris Cedex 16 (FR)
(72) Inventeur: CHAUMONNOT, Alexandra, F-69008 Lyon (FR); SANCHEZ, Clément, F-91440 Bures-sur-Yvette (FR); BOISSIERE, Cédric, F-75013 Paris (FR); COLBEAU-JUSTIN, Frédéric, F-94200 Ivry-sur-Seine (FR); BONDUELLE, Audrey, F-69340 Francheville (FR)
(74) Mandataire: IFP Energies nouvelles
(86) Numéro de dépôt international: PCT/FR2011/000653
(87) Numéro de publication internationale: WO 2012/085354

(56) Documents cités:
- EP-A1- 1 627 852
- WO-A1-2006/128988
- WO-A1-2006/128989
- WO-A1-2009/130401

## Description

La présente invention se rapporte au domaine des matériaux oxydes inorganiques, notamment à ceux contenant des métaux de transition, présentant une porosité organisée et uniforme dans le domaine de la mésoporosité. Elle concerne également la préparation de ces matériaux qui sont obtenus par l'emploi de la technique de synthèse dite "aérosol". Elle concerne encore l'utilisation de ces matériaux après sulfuration en tant que catalyseurs dans divers procédés se rapportant aux domaines de l'hydrotraitement, de l'hydroconversion et de la production de charges hydrocarbonées.

### État de la technique antérieure

La composition et l'utilisation des catalyseurs d'hydroconversion (HDC) et d'hydrotraitement (HDT) de charges hydrocarbonées sont respectivement décrites dans l'ouvrage "Hydrocracking Science and Technology", 1996, J. Scherzer, A. J. Gruia, Marcel Dekker Inc et dans l'article de B. S Clausen, H. T. Topsøe, F. E. Massoth, issu de l'ouvrage "Catalysis Science and Technology", 1996, volume 11, Springer-Verlag. Ainsi, ces catalyseurs se caractérisent généralement par une fonction hydro-déshydrogénante apportée par la présence d'une phase active à base d'au moins un métal du groupe VIB et/ou au moins un métal du groupe VB et éventuellement au moins un métal du groupe VIII du tableau périodique des éléments. Les formulations les plus courantes sont de type cobalt-molybdène (CoMo), nickel-molybdène (NiMo) et nickel-tungstène (NiW). Ces catalyseurs peuvent se présenter sous forme massique ou bien à l'état supporté mettant alors enjeu un solide poreux. Après préparation, au moins un métal du groupe VIB et/ou au moins un métal du groupe VB et éventuellement au moins un métal du groupe VIII présent(s) dans la composition catalytique desdits catalyseurs se présente(nt) souvent sous forme d'oxyde. La forme active et stable pour les procédés d'HDC et d'HDT étant la forme sulfurée, ces catalyseurs sont soumis à une étape de sulfuration.

Il est généralement connu de l'Homme du métier que de bonnes performances catalytiques dans les domaines d'application mentionnés ci-dessus sont fonction 1) de la nature de la charge hydrocarbonée à traiter, 2) du procédé employé, 3) des conditions opératoires de fonctionnement choisies et 4) du catalyseur utilisé. Dans ce dernier cas, il est également admis qu'un catalyseur présentant un fort potentiel catalytique se caractérise 1) par une fonction hydro-déshydrogénante optimisée (phase active associée parfaitement dispersée à la surface du support et présentant une teneur en métal élevée) et 2) dans le cas particulier des procédés mettant en jeu des réactions d'hydroconversion (HDC), par un bon équilibre entre ladite fonction hydro-déshydrogénante et la fonction craquante amenée par la fonction acide d'un support. On recherche également généralement à ce que, quelle que soit la nature de la charge hydrocarbonée à traiter, le catalyseur présente une accessibilité satisfaisante des sites actifs vis-à-vis des réactifs et produits de réactions tout en développant une surface active élevée, ce qui conduit à des contraintes spécifiques en terme de structure et de texture propres au support oxyde présent dans lesdits catalyseurs. Ce dernier point est tout particulièrement critique dans le cas du traitement de charges hydrocarbonées dites "lourdes".

Les méthodes usuelles conduisant à la formation de la phase hydro-déshydrogénante des catalyseurs d'HDC et d'HDT consistent en un dépôt de précurseur(s) moléculaire(s) d'au moins un métal du groupe VIB et/ou au moins un métal du groupe VB et éventuellement au moins un métal du groupe VIII sur un support oxyde par la technique dite "d'imprégnation à sec" suivi des étapes de maturation, séchage et calcination conduisant à la formation de la forme oxydée du(des)dit(s) métal(aux) employé(s). On procède ensuite à l'étape finale de sulfuration génératrice de la phase active hydro-déshydrogénante comme mentionné ci-dessus.

Les performances catalytiques de catalyseurs issus de ces protocoles de synthèse conventionnels ont largement été étudiées. En particulier, il a été montré que, pour des teneurs en métal relativement élevées, des phases réfractaires à la sulfuration formées consécutivement à l'étape de calcination (phénomène de frittage) apparaissent (B. S. Clausen, H. T. Topsøe, et F. E. Massoth, issu de l'ouvrage "Catalysis Science and Technology", 1996, volume 11, Springer-Verlag). Par exemple, dans le cas des catalyseurs de type CoMo ou NiMo supporté sur un support de nature aluminique, il s'agit 1) de cristallites de MoO₃, NiO, CoO, CoMoO₄ ou Co₃O₄, de taille suffisante pour être détectés en DRX, et/ou 2) des espèces du type Al₂(MoO₄)₃, CoAl₂O₄ ou NiAl₂O₄. Les trois espèces précitées contenant l'élément aluminium sont bien connues de l'Homme du métier. Elles résultent de l'interaction entre le support aluminique et les sels précurseurs en solution de la phase active hydro-déshydrogénante, ce qui se traduit concrètement par une réaction entre des ions Al³⁺ extraits de la matrice aluminique et lesdits sels pour former des hétéropolyanions d'Anderson de formule [Al(OH)₆Mo₆O₁₈]³⁻, eux-mêmes précurseurs des phases réfractaires à la sulfuration. La présence de l'ensemble de ces espèces conduit à une perte indirecte non négligeable de l'activité catalytique du catalyseur associé car la totalité des éléments appartenant au moins à un métal du groupe VIB et/ou au moins un métal du groupe VB et éventuellement au moins un métal du groupe VIII n'est pas utilisée au maximum de son potentiel puisque une partie de ceux-ci est immobilisée dans des espèces peu ou non actives.

Les performances catalytiques des catalyseurs conventionnels décrits ci-dessus pourraient donc être améliorées, notamment en développant de nouvelles méthodes de préparation de ces catalyseurs qui permettraient :
1) d'assurer une bonne dispersion de la phase hydro-déshydrogénante, en particulier pour des teneurs en métal élevées (par exemple par contrôle de la taille des particules à base de métaux de transition, maintien des propriétés de ces particules après traitement thermique, etc.),
2) de limiter la formation des espèces réfractaires à la sulfuration (par exemple par l'obtention d'une meilleure synergie entre les métaux de transition formant la phase active, contrôle des interactions entre la phase active hydro-déshydrogénante (et/ou ses précurseurs) et le support poreux employé, etc.),
3) d'assurer une bonne diffusion des réactifs et des produits des réactions tout en maintenant des surfaces actives développées élevées (optimisation des propriétés chimiques, texturales et structurales du support poreux).

Pour répondre aux besoins exprimés ci-dessus, il a été développé des catalyseurs d'hydroconversion et d'hydrotraitement dont les précurseurs de la phase active hydro-déshydrogénante sont formés d'hétéropolyanions (HPA), par exemple d'hétéropolyanions à base de cobalt et de molybdène (systèmes CoMo), de nickel et de molybdène (systèmes NiMo), de nickel et de tungstène (NiW), de nickel, vanadium et de molybdène (systèmes NiMoV) ou de phosphore et de molybdène (PMo). Par exemple, la demande de brevet FR 2.843.050 divulgue un catalyseur d'hydroraffinage et/ou d'hydroconversion comprenant au moins un élément du groupe VIII et au moins du molybdène et/ou du tungstène présents au moins en partie sous la forme d'hétéropolyanions dans le précurseur oxyde. De manière générale, les hétéropolyanions sont imprégnés sur un support oxyde.

Depuis une dizaine d'années, d'autres catalyseurs dont les supports présentent une porosité hiérarchisée et contrôlée ont été développés. Dans le cadre des applications se rapportant aux domaines de l'hydrotraitement, de l'hydroconversion et de la production de charges hydrocarbonées, au delà du compromis accessibilité (liée à la taille des pores)/surface active développée (liée à la surface spécifique) qu'il est bon de maîtriser, il est important de contrôler des paramètres comme la longueur des pores, la tortuosité ou encore la connexité entre les pores (définie par le nombre d'accès de chaque cavité). Les propriétés structurales liées à un agencement périodique et à une morphologie particulière des pores sont des paramètres essentiels à maîtriser. Par exemple, le brevet US 2007/152181 enseigne qu'il est avantageux d'utiliser pour la transformation de coupes pétrolières variées des supports de catalyseurs de type alumine mésotructurée développant une grande surface spécifique et une distribution homogène de taille de pores. La demande de brevet FR 2.834.978 enseigne également que l'incorporation de particules métalliques dans les parois d'un solide mésostructuré confère à ces particules une résistance thermique au frittage accrue (maintien de la dispersion des particules de départ). La demande WO 2006/128989 décrit un matériau mésostructuré constitué d'au moins deux particules sphériques élémentaires comprenant chacune une matrice mésostructurée à base d'oxyde d'aluminium et ayant un diamètre maximal de 10µm. La demande EP 1 627 852 quant à elle décrit un matériau aluminosilicate mésostructuré constitué d'au moins deux particules sphériques élémentaires comprenant une matrice mésostructurée à base d'oxyde de silicium et d'oxyde d'aluminium tel que le rapport molaire Si/Al est au moins égal à 1. Les matériaux des demandes WO 2006/128989 et EP 1 627 852 peuvent être associés à une phase métallique introduite par échange d'ions ou par imprégnation. Les demandes WO 2006/128988 et WO 2009/130401 décrivent des matériaux inorganiques constitués d'au moins deux particules sphériques élémentaires, chacune desdites particules sphériques comprenant des nanoparticules métalliques de taille comprise entre 1 et 300 nm et une matrice mésostructurée.

### Résumé de l'invention

La présente invention a pour objet un matériau inorganique constitué d'au moins deux particules sphériques élémentaires, chacune desdites particules sphériques comprenant des nanoparticules métalliques présentant au moins une bande de nombre d'ondes compris entre 750 et 1050 cm⁻¹ en spectroscopie Raman choisies parmi des espèces monomolybdiques, des espèces monotungstiques, des espèces polymolybdiques ou des espèces polytungstiques, lesdites nanoparticules métalliques étant présentes au sein d'une matrice mésostructurée à base d'oxyde d'au moins un élément Y choisi dans le groupe constitué par le silicium, l'aluminium, le titane, le zirconium, le gallium, le germanium, le cérium et le mélange d'au moins deux de ces éléments, ladite matrice présentant des pores de diamètre compris entre 1,5 et 50 nm et présentant des parois amorphes d'épaisseur comprise entre 1 et 30 nm, lesdites particules sphériques élémentaires ayant un diamètre maximal de 200 microns et lesdites nanoparticules métalliques ayant une taille maximale strictement inférieure à 1 nm, lesdites nanoparticules métalliques n'étant pas détectées par microscopie électronique en transmission (MET).
Le matériau selon l'invention est préparé selon la technique de synthèse particulière dite "aérosol".
Le matériau inorganique mésostructuré selon l'invention est utilisé, après sulfuration, en tant que catalyseur dans différents procédés de transformation de charges hydrocarbonées, en particulier dans les procédés catalytiques mettant en jeu l'hydrotraitement et/ou l'hydroconversion de coupes hydrocarbonées dans le domaine du raffinage.

### Intérêt de l'invention

Le matériau selon l'invention comprenant des nanoparticules métalliques, piégées dans la matrice mésostructurée de chacune des particules sphériques élémentaires constituant ledit matériau, est un précurseur catalytique avantageux. Il présente simultanément les propriétés propres à la présence de nanoparticules métalliques, notamment une meilleure dispersion de la phase active, une meilleure synergie entre les sites hydro-déshydrogénant et les sites acides éventuels, une diminution des phases réfractaires à la sulfuration, et les propriétés structurales, texturales et éventuellement d'acido-basicité et d'oxydo-réduction propres aux matériaux mésostructurés à base d'oxyde d'au moins un élément Y, notamment le transfert de matière non limitant des réactifs et des produits de réaction et la valeur élevée de la surface active. Les nanoparticules métalliques sont les espèces précurseurs de la phase active sulfurée présente dans le catalyseur issu du matériau selon l'invention après sulfuration.

Les propriétés de diffusion des réactifs et des produits de réaction, associées au matériau inorganique selon l'invention constitué de particules élémentaires sphériques présentant un diamètre maximal égal à 200 µm, sont accrues par rapport à celles d'autres matériaux mésostructurés connus de l'état de la technique, obtenus hors voie aérosol et se présentant sous la forme de particules élémentaires de forme non homogène, c'est-à-dire irrégulière, et de taille très supérieure à 500 nm. En plus des propriétés propres d'une part aux nanoparticules métalliques, et d'autre part à la matrice oxyde mésostructurée présente dans chacune des particules sphériques du matériau selon l'invention, le piégeage des nanoparticules métalliques, au sein de la matrice oxyde mésostructurée génère des effets techniques additionnels favorables comme le contrôle de la taille desdites nanoparticules métallique, l'augmentation de la stabilité thermique desdites nanoparticules, le développement d'interactions nanoparticules/support originales.

D'autre part, le procédé de préparation par voie aérosol du matériau selon l'invention permet d'élaborer de façon aisée en une seule étape (one pot) des précurseurs variés, à base de nanoparticules métalliques, de catalyseurs sulfurés.

De plus, par rapport aux synthèses connues des matériaux mésostructurés hors voie aérosol, la préparation du matériau selon l'invention est réalisée en continu, la durée de préparation est réduite (quelques heures contre de 12 à 24 heures en utilisant l'autoclavage) et la stoechiométrie des espèces non volatiles présentes dans la solution initiale des réactifs est maintenue dans le matériau de l'invention.

### Exposé de l'invention

La présente invention a pour objet un matériau inorganique constitué d'au moins deux particules sphériques élémentaires, chacune desdites particules sphériques comprenant des nanoparticules métalliques présentant au moins une bande de nombre d'ondes compris entre 750 et 1050 cm⁻¹ en spectroscopie Raman, choisies parmi des espèces monomolybdiques, des espèces monotungstiques, des espèces polymolybdiques ou des espèces polytungstiques, lesdites nanoparticules métalliques étant présentes au sein d'une matrice mésostructurée à base d'oxyde d'au moins un élément Y choisi dans le groupe constitué par le silicium, l'aluminium, le titane, le zirconium, le gallium, le germanium, le cérium et le mélange d'au moins deux de ces éléments, ladite matrice présentant des pores de diamètre compris entre 1,5 et 50 nm et présentant des parois amorphes d'épaisseur comprise entre 1 et 30 nm, lesdites particules sphériques élémentaires ayant un diamètre maximal de 200 microns et lesdites nanoparticules métalliques ayant une taille maximale strictement inférieure à 1 nm.

Conformément à l'invention, l'élément Y présent sous forme d'oxyde dans la matrice mésostructurée comprise dans chacune desdites particules sphériques du matériau selon l'invention est choisi dans le groupe constitué par le silicium, l'aluminium, le titane, le zirconium, le gallium, le germanium et le cérium et le mélange d'au moins deux de ces éléments. De manière encore plus préférée, ledit élément Y présent sous forme d'oxyde est choisi dans le groupe constitué par le silicium, l'aluminium, le titane, le zirconium et le mélange d'au moins deux de ces éléments. Selon l'invention, ladite matrice mésostructurée est préférentiellement constituée d'oxyde d'aluminium, d'oxyde de silicium, d'un mélange d'oxyde de silicium et d'oxyde d'aluminium ou encore d'un mélange d'oxyde de silicium et d'oxyde de zirconium. Dans le cas préféré où ladite matrice mésostructurée est un mélange d'oxyde de silicium et d'oxyde d'aluminium (aluminosilicate), ladite matrice présente un rapport molaire Si/Al au moins égal à 0,02, de préférence compris entre 0,1 et 1000 et de manière très préférée compris entre 1 et 100.

Ladite matrice à base d'oxyde d'au moins dudit élément Y est mésostructurée : elle présente une porosité organisée à l'échelle des mésopores de chacune des particules élémentaires du matériau selon l'invention, c'est-à-dire une porosité organisée à l'échelle des pores ayant un diamètre uniforme compris entre 1,5 et 50 nm, de préférence entre 1,5 et 30 nm et de manière encore plus préférée entre 4 et 20 nm et répartis de façon homogène et régulière dans chacune desdites particules (mésostructuration de la matrice). La matière située entre les mésopores de la matrice mésostructurée est amorphe et forme des parois, ou murs, dont l'épaisseur est comprise entre 1 et 30 nm et de préférence entre 1 et 10 nm. L'épaisseur des parois correspond à la distance séparant un premier mésopore d'un second mésopore, le second mésopore étant le pore le plus proche dudit premier mésopore. L'organisation de la mésoporosité décrite ci-dessus conduit à une structuration de ladite matrice, laquelle peut être hexagonale, vermiculaire ou cubique et de façon préférée vermiculaire. La matrice mésostructurée ne présente avantageusement aucune porosité dans le domaine de la microporosité.

Le matériau selon l'invention présente également une macroporosité texturale interparticulaire.

La matrice mésostructurée comprise dans chacune desdites particules sphériques du matériau selon l'invention comprend des nanoparticules métalliques contenant du molybdène et/ou du tungstène. Plus précisément, lesdites nanoparticules métalliques sont piégées dans la matrice mésostructurée. Ledit métal choisi parmi le molybdène ou le tungstène, se trouve dans un environnement oxygéné. Lesdites nanoparticules métalliques piégées dans la matrice oxyde mésostructurée comprise dans chacune desdites particules sphériques du matériau selon l'invention présentent avantageusement des atomes M dont le degré d'oxydation est égal à +IV, +V et/ou +VI. Les nanoparticules métalliques sont piégées de façon homogène et uniforme dans la matrice. Lesdites nanoparticules sont des espèces monomolybdiques, des espèces monotungstiques, des espèces polymolybdiques ou des espèces polytungstiques. De telles espèces, en particulier des espèces polymolybdates, sont décrites par par S. B. Umbarkar et al., Journal of molecular catalysis A: Chemical, 310, 2009, 152. De manière très avantageuse, ladite matrice mésostructurée comprend des nanoparticules métalliques à base de molybdène et d'autres nanoparticules à base de tungstène. Lesdites nanoparticules métalliques sont préparées selon des protocoles connus de l'Homme du métier en utilisant des précurseurs avantageusement monométalliques tels que ceux décrits ci-après dans l'exposé de l'invention. Elles présentent une taille strictement inférieure à 1 nm. En particulier, lesdites nanoparticules métalliques ne sont pas détectées par microscopie électronique en transmission (MET). Conformément à l'invention, lesdites particules sphériques constituant le matériau de l'invention sont dépourvues de la présence de particules métalliques sous la forme de d'hétéropolyanions.

Conformément à l'invention, lesdites nanoparticules métalliques sont caractérisées par la présence d'au moins une bande de nombre d'ondes compris entre 750 et 1050 cm⁻¹ en spectroscopie Raman. La spectroscopie Raman est une technique bien connue de l'Homme du métier. Plus précisément, lesdites nanoparticules métalliques présentent au moins une bande de nombre d'ondes compris entre 750 et 950 cm⁻¹ ou entre 950 et 1050 cm⁻¹. La bande de nombre d'ondes compris entre 750 et 950 cm⁻¹ est attribuable aux liaisons d'étirement (stretching en anglais) antisymétriques (M--O-M) ou aux liaisons d'étirement (stretching en anglais) symétriques (-O-M-O-). La bande de nombre d'ondes compris entre 950 et 1050 cm⁻¹ est attribuable aux modes d'étirement des liaisons terminales M=O. L'élément M présent dans les liaisons M-O-M, -O-M-O-, et M=O est choisi parmi le molybdène et/ou le tungstène. L'appareillage Raman utilisé pour la mise en évidence desdites nanoparticules métalliques est décrit plus loin dans la présente description.

Lesdites nanoparticules représentent avantageusement de 4 à 50% poids, de préférence de 5 à40 % poids et de manière très préférée de 6 à30 % poids du matériau de l'invention.

Le matériau inorganique selon l'invention comprend une teneur massique en élément(s) molybdène et tungstène comprise entre 1 et 40%, exprimé en % poids d'oxyde par rapport à la masse de matériau final sous forme oxyde, de préférence entre 4 et 35% poids, de façon préférée entre 4 et 30% et de manière encore plus préférée entre 4 et 20%.

Selon un premier mode de réalisation particulier du matériau selon l'invention, chacune des particules sphériques constituant ledit matériau comprend en outre des nanocristaux zéolithiques. Lesdits nanocristaux zéolithiques sont piégés avec les nanoparticules métalliques dans la matrice mésostructurée contenue dans chacune des particules sphériques élémentaires. Conformément à ce mode de réalisation de l'invention consistant à piéger des nanocristaux zéolithiques dans la matrice mésostructurée, le matériau selon l'invention présente à la fois, dans chacune des particules sphériques élémentaires, une mésoporosité au sein de la matrice elle-même (mésopores de diamètre uniforme compris entre 1,5 et 50 nm, de préférence entre 1,5 et 30 nm et de façon encore plus préférée entre 4 et 20 nm) et une microporosité de type zéolithique générée par les nanocristaux zéolithiques piégés dans la matrice mésostructurée. Lesdits nanocristaux zéolithiques présentent une taille de pores comprise entre 0,2 et 2 nm, de préférence entre 0,2 et 1 nm et de manière très préférée entre 0,2 et 0,8 nm. Lesdits nanocristaux zéolithiques représentent avantageusement de 0,1 à 30% poids, de préférence de 0,1 à 20% poids et de manière très préférée de 0,1 à 10% poids du matériau de l'invention. Les nanocristaux zéolithiques ont une taille maximale, généralement un diamètre maximal, de 300 nm et de façon préférée ont une taille, généralement un diamètre, compris(e) entre 10 et 150 nm. Toute zéolithe et en particulier mais de façon non restrictive celles répertoriées dans "Atlas of zeolite framework types", 6th revised Edition, 2007, Ch. Baerlocher, L. B. McCusker, D. H. Olson peut être employée dans les nanocristaux zéolithiques présents dans chacune des particules sphériques élémentaires constituant le matériau selon l'invention. Les nanocristaux zéolithiques comprennent de préférence au moins une zéolithe choisie parmi les zéolithes IZM-2, ZSM-5, ZSM-12, ZSM-48, ZSM-22, ZSM-23, ZBM-30, EU-2, EU-11, silicalite, bêta, zéolithe A, faujasite, Y, USY, VUSY, SDUSY, mordénite, NU-10, NU-87, NU-88, NU-86, NU-85, IM-5, IM-12, IM-16, ferriérite et EU-1. De manière très préférée, les nanocristaux zéolithiques comprennent au moins une zéolithe choisie parmi les zéolithes de type structural MFI, BEA, FAU et LTA. Des nanocristaux de différentes zéolithes et notamment de zéolithes de type structural différent peuvent être présents dans chacune des particules sphériques constituant le matériau selon l'invention. En particulier, chacune des particules sphériques constituant le matériau selon l'invention peut comprendre de manière avantageuse au moins des premiers nanocristaux zéolithiques dont la zéolithe est choisie parmi les zéolithes IZM-2, ZSM-5, ZSM-12, ZSM-48, ZSM-22, ZSM-23, ZBM-30, EU-2, EU-11, silicalite, bêta, zéolithe A, faujasite, Y, USY, VUSY, SDUSY, mordénite, NU-10, NU-87, NU-88, NU-86, NU-85, IM-5, IM-12, IM-16, ferriérite et EU-1, de préférence parmi les zéolithes de type structural MFI, BEA, FAU, et LTA et au moins des seconds nanocristaux zéolithiques dont la zéolithe est différente de celle des premiers nanocristaux zéolithiques et est choisie parmi les zéolithes IZM-2, ZSM-5, ZSM-12, ZSM-48, ZSM-22, ZSM-23, ZBM-30, EU-2, EU-11, silicalite, bêta, zéolithe A, faujasite, Y, USY, VUSY, SDUSY, mordénite, NU-10, NU-87, NU-88, NU-86, NU-85, IM-5, IM-12, IM-16, ferriérite et EU-1, de préférence parmi les zéolithes de type structural MFI, BEA, FAU et LTA. Les nanocristaux zéolithiques comprennent avantageusement au moins une zéolithe soit entièrement silicique soit contenant, outre du silicium, au moins un élément T choisi parmi l'aluminium, le fer, le bore, l'indium, le gallium et le germanium, de préférence l'aluminium.

Selon un deuxième mode de réalisation particulier du matériau selon l'invention, indépendant ou non dudit premier mode décrit ci-dessus, chacune des particules sphériques constituant ledit matériau comprend en outre un ou plusieurs élément(s) additionnel(s) choisi(s) parmi des agents organiques, les métaux du groupe VIII de la classification périodique des éléments et des espèces dopantes appartenant à la liste des éléments dopants constitués par le phosphore, le fluor, le silicium et le bore et leurs mélanges. Le(s)dit(s) métal(ux) du groupe VIII en tant qu'élément additionnel est(sont) avantageusement choisi(s) parmi le cobalt, le nickel et le mélange de ces deux métaux. Le matériau inorganique selon l'invention comprend une teneur massique globale en métal(ux) du groupe VIII, notamment en nickel et/ou cobalt, comprise entre 0 et 15%, exprimé en % poids d'oxyde par rapport à la masse du matériau final sous forme oxyde, de préférence entre 0,5 et 10% poids et de manière encore plus préférée entre 1 et 8% poids. La teneur totale en ladite espèce dopante (P, F, Si, B et leurs mélanges) est comprise entre 0,1 et 10% poids, de préférence entre 0,5 et 8% poids, et de manière encore plus préférée entre 0,5 et 6% poids, exprimé en % poids oxyde, par rapport au poids du matériau inorganique mésostructuré selon l'invention. Le rapport atomique entre l'espèce dopante et le(s) métal(ux) choisi(s) parmi Mo et W est de préférence compris entre 0,05 et 0,9, de manière encore plus préférée entre 0,08 et 0,8, l'espèce dopante et le(s) métal(ux) choisi(s) parmi Mo, W pris en compte pour le calcul de ce rapport correspondant à la teneur totale, dans le matériau selon l'invention, en espèce dopante et en métal(ux) choisi(s) parmi Mo et W. Conformément à l'invention, lesdites particules sphériques élémentaires constituant le matériau selon l'invention ont un diamètre maximum égal à 200 µm, de préférence inférieur à 100 µm, variant avantageusement de 50 nm à 50 µm, très avantageusement de 50 nm à 30 µm et de manière encore plus avantageuse de 50 nm à 10 µm. Plus précisément, elles sont présentes dans le matériau selon l'invention sous la forme de poudre, de billes, de pastilles, de granulés, ou d'extrudés (cylindres creux ou non, cylindres multilobés à 2, 3, 4 ou 5 lobes par exemple, cylindres torsadés) ou d'anneaux. Le matériau selon l'invention présente avantageusement une surface spécifique comprise entre 50 et 1100 m²/g et de manière très avantageuse comprise entre 50 et 600 m²/g et de manière encore plus avantageuse ente 50 et 400 m²/g.

La présente invention a également pour objet un procédé de préparation du matériau selon l'invention.

Ledit procédé de préparation selon l'invention comprend au moins les étapes successives suivantes :
a) le mélange en solution
   - d'au moins un tensioactif,
   - d'au moins un précurseur d'au moins un élément Y choisi dans le groupe constitué par le silicium, l'aluminium, le titane, le zirconium, le gallium, le germanium, le cérium et le mélange d'au moins deux de ces éléments,
   - d'au moins un premier précurseur métallique choisi parmi un premier précurseur monométallique à base de molybdène ou de tungstène,
   - éventuellement d'au moins une solution colloïdale dans laquelle sont dispersés des cristaux de zéolithes de taille nanométrique maximale égale à 300 nm ;
b) l'atomisation par aérosol de ladite solution obtenue à l'étape a) pour conduire à la formation de gouttelettes liquides sphériques ; c) le séchage desdites gouttelettes ; d) l'élimination d'au moins dudit tensioactif pour l'obtention dudit matériau inorganique mésostructuré dans lequel sont piégées lesdites nanoparticules métalliques.

Conformément au procédé de préparation selon l'invention, la préparation desdites nanoparticules est préférentiellement réalisée par la mise en solution, préalablement à ladite étape a), du(es) précurseur(s) métallique(s) nécessaire(s), à savoir d'au moins dudit premier précurseur métallique, ladite solution étant ensuite introduite dans le mélange selon ladite étape a). De manière préférée, le solvant utilisé pour la mise en solution du ou des précurseurs est aqueux et la solution obtenue à l'issue de la mise en solution du(es) précurseur(s) métallique(s), préalablement à l'étape a), contenant lesdits précurseurs, est limpide et de pH neutre, basique ou acide, de préférence acide. Ledit premier précurseur métallique employé est avantageusement un précurseur monométallique. Ledit premier précurseur monométallique est à base de molybdène ou de tungstène. Il est avantageux d'utiliser aux moins deux précurseurs métalliques, chacun desdits précurseurs étant à base d'un métal différent choisi parmi le molybdène et le tungstène. Par exemple, on utilise avantageusement un précurseur à base de molybdène et un précurseur à base de tungstène de manière à piéger dans ladite matrice des nanoparticules à base de molybdène et des nanoparticules à base de tungstène.

Dans le cas préféré où lesdites nanoparticules comprennent du tungstène et/ou du molybdène, ledit premier précurseur monométallique formé de l'une des espèces suivantes est avantageusement utilisé dans le procédé selon l'invention : les espèces de type alcoolate ou phénolate (liaison W-O, liaison Mo-O), les espèces de type amidure (liaison W-NR₂, liaison Mo-NR₂), les espèces de type halogénure (liaison W-Cl, liaison Mo-Cl par exemple), les espèces de type imido (liaison W=N-R, liaison Mo=N-R), les espèces de type oxo (liaison W=O, liaison Mo=O), les espèces de type hydrure (liaison W-H, liaison Mo-H). De manière avantageuse, ledit premier précurseur monométallique est choisi parmi les espèces suivantes : (NH₄)₂MO₄ (M = Mo, W), Na₂MO₄ (M = Mo, W), H₂MoO₄, (NH₄)₂MS₄ (M = Mo, W), MoO₂Cl₂, MoCl₄, MoCl₅, W(OEt)₅, W(Et)₆, WCl₆, WCl₄, WCl₂, WPhCl₃. Toutefois tout précurseur monométallique bien connu de l'Homme du métier peut être employé.

Conformément à l'étape a) du procédé de préparation du matériau inorganique mésostructuré selon l'invention, le(s) précurseur(s) d'au moins un élément Y choisi dans le groupe constitué par le silicium, l'aluminium, le titane, le zirconium, le gallium, le germanium et le cérium et le mélange d'au moins deux de ces éléments est(sont) un(des) précurseur(s) d'oxyde inorganique bien connu(s) de l'Homme du métier. Le(s) précurseur(s) d'au moins dudit élément Y peu(ven)t être tout composé comprenant l'élément Y et pouvant libérer cet élément en solution, par exemple en solution aquo-organique, préférentiellement en solution aquo-organique acide, sous forme réactive. Dans le cas où Y est choisi dans le groupe constitué par le silicium, l'aluminium, le titane, le zirconium, le gallium, le germanium et le cérium et le mélange d'au moins deux de ces éléments, le(s) précurseur(s) d'au moins dudit élément Y est(sont) avantageusement un sel inorganique dudit élément Y de formule YZₙ, (n = 3 ou 4), Z étant un halogène, le groupement NO₃ ou un perchlorate, de préférence Z est le chlore. Le(s) précurseur(s) d'au moins dudit élément Y considéré(s) peu(ven)t être aussi un(des) précurseur(s) alcoxyde(s) de formule Y(OR)ₙ où R = éthyle, isopropyle, n-butyle, s-butyle, t-butyle, etc. ou un précurseur chélaté tel que Y(C₅H₈O₂)ₙ, avec n = 3 ou 4. Le(s) précurseur(s) d'au moins dudit élément Y considéré(s) peu(ven)t encore être un(des) oxyde(s) ou un(des) hydroxyde(s) dudit élément Y. En fonction de la nature de l'élément Y, le précurseur de l'élément Y considéré employé peut aussi être de la forme YOZ₂, Z étant un anion monovalent comme un halogène ou le groupement NO₃. Le(s)dit(s) élément(s) Y est(sont) choisi(s) dans le groupe constitué par le silicium, l'aluminium, le titane, le zirconium, le gallium, le germanium et le cérium et le mélange d'au moins deux de ces éléments. De manière très préférée, la matrice oxyde mésostructurée comprend, de préférence est constituée, d'oxyde d'aluminium, d'oxyde de silicium (Y = Si ou Al) ou comprend, de préférence est constituée, d'un mélange d'oxyde de silicium et d'oxyde d'aluminium (Y = Si + Al) ou encore d'un mélange d'oxyde de silicium et d'oxyde de zirconium (Y = Si + Zr). Dans le cas particulier où Y est le silicium ou l'aluminium ou un mélange de silicium et d'aluminium ou un mélange de silicium et de zirconium, les précurseurs silicique et/ou aluminique et les précurseurs du zirconium, utilisés dans l'étape a) du procédé de préparation du matériau selon l'invention sont des précurseurs d'oxydes inorganiques bien connus de l'Homme du métier. Le précurseur silicique est obtenu à partir de toute source de silice et avantageusement d'un précurseur silicate de sodium de formule Na₂SiO₃, d'un précurseur chloré de formule SiCl₄, d'un précurseur alcoxyde de formule Si(OR)₄ où R = H, méthyle, éthyle ou d'un précurseur chloroalcoxyde de formule Si(OR)₄₋ₐClₐ où R = H, méthyle, éthyle, a étant compris entre 0 et 4. Le précurseur silicique peut également avantageusement être un précurseur alcoxyde de formule Si(OR)₄₋ₐR'ₐ où R = H, méthyle, éthyle et R' est une chaîne alkyle ou une chaîne alkyle fonctionnalisée, par exemple par un groupement thiol, amino, β dicétone, acide sulfonique, a étant compris entre 0 et 4. Un précurseur silicique préféré est le tétraéthylorthosilicate (TEOS). Le précurseur aluminique est avantageusement un sel inorganique d'aluminium de formule AlZ₃, Z étant un halogène ou le groupement NO₃. De préférence, Z est le chlore. Le précurseur aluminique peut être aussi un précurseur alcoxyde de formule Al(OR")₃ ou R" = éthyle, isopropyle, n-butyle, s-butyle ou t-butyle ou un précurseur chélaté tel que l'aluminium acétylacétonate (Al(CH₇O₂)₃). Le précurseur aluminique peut aussi être un oxyde ou un hydroxyde d'aluminium.

Le tensioactif utilisé pour la préparation du mélange selon l'étape a) du procédé de préparation du matériau selon l'invention est un tensioactif ionique ou non ionique ou un mélange des deux. De préférence, le tensioactif ionique est choisi parmi les ions phosphonium et ammonium et très préférentiellement parmi les sels d'ammonium quaternaire comme le bromure de céthyltriméthylammonium (CTAB). De préférence, le tensioactif non ionique peut être tout copolymère possédant au moins deux parties de polarités différentes leur conférant des propriétés de macromolécules amphiphiles. Ces copolymères peuvent comporter au moins un bloc faisant partie de la liste non exhaustive des familles de polymères suivantes : les polymères fluorés (-[CH₂-CH₂-CH₂-CH₂-O-CO-R1- avec R1 = C₄F₉, C₈F₁₇, etc.), les polymères biologiques comme les polyacides aminés (poly-lysine, alginates, etc.), les dendrimères, les polymères constitués de chaînes de poly(oxyde d'alkylène). De façon générale, tout copolymère à caractère amphiphile connu de l'Homme du métier peut être utilisé (S. Förster, M. Antionnetti, Adv.Mater, 1998, 10, 195-217 ; S. Förster, T. Plantenberg, Angew. Chem. Int. Ed, 2002, 41, 688-714 ; H. Cölfen, Macromol. Rapid Commun, 2001, 22, 219). De manière préférée, on utilise, dans le cadre de la présente invention, un copolymère à bloc constitué de chaînes de poly(oxyde d'alkylène). Ledit copolymère à bloc est de préférence un copolymère à bloc ayant deux, trois ou quatre blocs, chaque bloc étant constitué d'une chaîne de poly(oxyde d'alkylène). Pour un copolymère à deux blocs, l'un des blocs est constitué d'une chaîne de poly(oxyde d'alkylène) de nature hydrophile et l'autre bloc est constitué d'une chaîne de poly(oxyde d'alkylène) de nature hydrophobe. Pour un copolymère à trois blocs, l'un au moins des blocs est constitué d'une chaîne de poly(oxyde d'alkylène) de nature hydrophile tandis que l'un au moins des autres blocs est constitué d'une chaîne de poly(oxyde d'alkylène) de nature hydrophobe. De préférence, dans le cas d'un copolymère à trois blocs, les chaînes de poly(oxyde d'alkylène) de nature hydrophile sont des chaînes de poly(oxyde d'éthylène) notées (PEO)_{w} et (PEO)_{z} et les chaînes de poly(oxyde d'alkylène) de nature hydrophobe sont des chaînes de poly(oxyde de propylène) notées (PPO)_{y}, des chaînes de poly(oxyde de butylène), ou des chaînes mixtes dont chaque chaîne est un mélange de plusieurs monomères d'oxyde d'alkylène. De manière très préférée, dans le cas d'un copolymère à trois blocs, on utilise un composé de formule (PEO)_{w}-(PPO)_{y}-(PEO)_{z} où w est compris entre 5 et 300 et y est compris entre 33 et 300 et z est compris entre 5 et 300. De préférence, les valeurs de w et z sont identiques. On utilise très avantageusement un composé dans lequel w = 20, y = 70 et z = 20 (P123) et un composé dans lequel w = 106, y = 70 et z = 106 (F127). Les tensioactifs non-ioniques commerciaux connus sous le nom de Pluronic (BASF), Tetronic (BASF), Triton (Sigma), Tergitol (Union Carbide), Brij (Aldrich) sont utilisables en tant que tensioactifs non-ioniques. Pour un copolymère à quatre blocs, deux des blocs sont constitués d'une chaîne de poly(oxyde d'alkylène) de nature hydrophile et les deux autres blocs sont constitués d'une chaîne de poly(oxydes) d'alkylène de nature hydrophobe. De façon préférée, on utilise pour la préparation du mélange selon l'étape a) du procédé de préparation du matériau selon l'invention le mélange d'un tensioactif ionique comme le CTAB et d'un tensioactif non ionique comme le P123 ou le F127.

Selon l'étape a) du procédé de préparation selon l'invention, la solution colloïdale dans laquelle sont dispersés des cristaux de zéolithes de taille nanométrique maximale égale à 300 nm, éventuellement additionnée au mélange visé à ladite étape a), est obtenue soit par synthèse préalable, en présence d'un agent structurant, de nanocristaux zéolithiques de taille nanométrique maximale égale à 300 nm soit par l'emploi de cristaux zéolithiques, qui présentent la caractéristique de se disperser sous la forme de nanocristaux de taille nanométrique maximale égale à 300 nm en solution par exemple en solution aquo-organique acide. S'agissant de la première variante consistant en une synthèse préalable des nanocristaux zéolithiques, ceux-ci sont synthétisés selon des protocoles opératoires connus de l'Homme du métier. En particulier, la synthèse de nanocristaux de zéolithe bêta a été décrite par T. Bein et coll., Micropor. Mesopor. Mater., 2003, 64, 165. La synthèse de nanocristaux de zéolithe Y a été décrite par T. J. Pinnavaia et coll., J. Am. Chem. Soc., 2000, 122, 8791. La synthèse de nanocristaux de zéolithe faujasite a été décrite dans Kloetstra et coll., Microporous Mater., 1996, 6, 287. La synthèse de nanocristaux de zéolithe ZSM-5 a été décrite par R. Mokaya et coll., J. Mater. Chem., 2004, 14, 863. La synthèse de nanocristaux de silicalite (ou de type structural MFI) a été décrite dans plusieurs publications : R. de Ruiter et coll., Synthesis of Microporous Materials, Vol. I ; M. L. Occelli, H. E. Robson (eds.), Van Nostrand Reinhold, New York, 1992, 167 ; A. E. Persson, B. J. Schoeman, J. Sterte, J. -E. Otterstedt, Zeolites, 1995, 15, 611. On synthétise généralement des nanocristaux zéolithiques en préparant un mélange réactionnel renfermant au moins une source silicique, éventuellement au moins une source d'au moins un élément T choisi parmi l'aluminium, le fer, le bore, l'indium, le gallium et le germanium, de préférence au moins une source aluminique, et au moins un agent structurant. Le mélange réactionnel pour la synthèse des nanocristaux zéolithiques est soit aqueux soit aquo-organique, par exemple un mélange eau-alcool. Le mélange réactionnel est avantageusement mis sous conditions hydrothermales sous une pression autogène, éventuellement en ajoutant du gaz, par exemple de l'azote, à une température comprise entre 50 et 200°C, de préférence entre 60 et 170°C et de manière encore préférentielle à une température qui ne dépasse pas 120°C jusqu'à la formation de nanocristaux zéolithiques. A l'issue dudit traitement hydrothermal, on obtient une solution colloïdale dans laquelle les nanocristaux se trouvent à l'état dispersé. L'agent structurant peut être ionique ou neutre selon la zéolithe à synthétiser. Il est fréquent d'utiliser les agents structurants de la liste non exhaustive suivante : des cations organiques azotés, des éléments de la famille des alcalins (Cs, K, Na, etc.), des éthercouronnes, des diamines ainsi que tout autre agent structurant bien connu de l'Homme du métier. S'agissant de la deuxième variante consistant à utiliser directement des cristaux zéolithiques, ceux-ci sont synthétisés par des méthodes connues de l'Homme du métier. Lesdits cristaux zéolithiques peuvent être déjà sous la forme de nanocristaux. On utilise aussi avantageusement des cristaux zéolithiques de taille supérieure à 300 nm, par exemple comprise entre 300 nm et 200 µm qui se dispersent en solution, par exemple en solution aquo-organique, préférentiellement en solution aquo-organique acide, sous la forme de nanocristaux de taille nanométrique maximale égale à 300 nm. L'obtention de cristaux zéolithiques se dispersant sous la forme de nanocristaux de taille nanométrique maximale égale à 300 nm est également possible en réalisant une fonctionnalisation de la surface des nanocristaux. Les cristaux zéolithiques utilisés se trouvent soit sous leur forme brute de synthèse, c'est-à-dire contenant encore l'agent structurant, soit sous leur forme calcinée, c'est-à-dire débarrassés dudit agent structurant. Lorsque les cristaux zéolithiques utilisés sont sous leur forme brute de synthèse, ledit agent structurant est éliminé au cours de l'étape d) du procédé de préparation selon l'invention.

La solution dans laquelle sont mélangés au moins un tensioactif, au moins un précurseur d'au moins un élément Y, au moins ledit premier précurseur métallique, éventuellement au moins ledit deuxième précurseur métallique, et éventuellement au moins une solution colloïdale stable dans laquelle sont dispersés des cristaux de zéolithes de taille nanométrique maximale égale à 300 nm conformément à l'étape a) du procédé de préparation du matériau selon l'invention peut être acide, neutre ou basique. De préférence, ladite solution est acide et présente un pH maximal égal à 3, de préférence compris entre 0 et 2. Les acides éventuellement utilisés pour obtenir une solution acide sont, de façon non exhaustive, l'acide chlorhydrique, l'acide sulfurique et l'acide nitrique. Ladite solution selon ladite étape a) peut être aqueuse ou peut être un mélange eau-solvant organique, le solvant organique étant préférentiellement un solvant polaire miscible à l'eau, notamment un alcool, préférentiellement de l'éthanol. Ladite solution selon ladite étape a) du procédé de préparation selon l'invention peut aussi être pratiquement organique, de préférence pratiquement alcoolique, la quantité d'eau étant telle que l'hydrolyse des précurseurs inorganiques soit assurée (quantité stoechiométrique). De manière très préférée, ladite solution selon ladite étape a) du procédé de préparation selon l'invention dans laquelle sont mélangés au moins un tensioactif, au moins un précurseur d'au moins un élément Y, au moins ledit premier précurseur métallique, éventuellement au moins ledit deuxième précurseur métallique et éventuellement au moins une solution colloïdale stable dans laquelle sont dispersés des cristaux de zéolithes de taille nanométrique maximale égale à 300 nm est un mélange aquo-organique acide, de manière très préférée un mélange eau acide-alcool.

La quantité de nanocristaux zéolithiques dispersés dans la solution colloïdale, obtenus selon la variante par synthèse préalable, en présence d'un agent structurant, de nanocristaux zéolithiques de taille nanométrique maximale égale à 300 nm ou selon la variante par l'emploi de cristaux zéolithiques, qui présentent la caractéristique de se disperser sous la forme de nanocristaux de taille nanométrique maximale égale à 300 nm en solution par exemple en solution aquo-organique acide, éventuellement introduite au cours de l'étape a) du procédé de préparation selon l'invention, est telle que les nanocristaux zéolithiques représentent avantageusement de 0,1 à 30% poids, de préférence de 0,1 à 20% poids et de manière très préférée de 0,1 à 10% poids du matériau de l'invention.

La quantité de nanoparticules métalliques telles que décrites plus haut dans la présente description est telle que lesdites nanoparticules représentent avantageusement de 4 à 50 % poids, de préférence de 5 à 40 % poids et de manière très préférée de 6 à 30 % poids du matériau de l'invention.

La concentration initiale en tensioactif introduit dans le mélange conformément à ladite étape a) du procédé de préparation selon l'invention est définie par c₀ et c₀ est définie par rapport à la concentration micellaire critique (c_{mc}) bien connue de l'Homme du métier. La c_{mc} est la concentration limite au delà de laquelle se produit le phénomène d'auto-assemblage des molécules du tensioactif dans la solution. La concentration c₀ peut être inférieure, égale ou supérieure à la c_{mc}, de préférence elle est inférieure à la c_{mc}. Dans une mise en oeuvre préférée du procédé de préparation du matériau selon l'invention, la concentration c₀ est inférieure à la c_{mc} et ladite solution visée à l'étape a) dudit procédé de préparation selon l'invention est un mélange eau acide-alcool. Dans le cas où la solution visée à l'étape a) du procédé de préparation selon l'invention est un mélange eau-solvant organique, de préférence acide, il est préféré au cours de ladite étape a) du procédé de préparation selon l'invention que la concentration en tensioactif à l'origine de la mésostructuration de la matrice soit inférieure à la concentration micellaire critique de sorte que l'évaporation de ladite solution aquo-organique, préférentiellement acide, au cours de l'étape b) du procédé de préparation selon l'invention par la technique d'aérosol induise un phénomène de micellisation ou d'auto-assemblage conduisant à la mésostructuration de la matrice du matériau selon l'invention autour desdites nanoparticules métalliques et éventuellement des nanocristaux zéolithiques lesquel(le)s demeurent inchangés dans leur forme et leur taille au cours des étapes b) et c) du procédé de préparation de l'invention. Lorsque c₀<c_{mc}, la mésostructuration de la matrice du matériau selon l'invention et préparé selon le procédé décrit ci-dessus est consécutive à une concentration progressive, au sein de chaque gouttelette, d'au moins du précurseur dudit élément Y et du tensioactif, jusqu'à une concentration en tensioactif c>c_{mc} résultant d'une évaporation de la solution aquo-organique, préférentiellement acide.

De manière générale, l'augmentation de la concentration conjointe d'au moins un précurseur dudit élément Y hydrolysé et du tensioactif provoque la précipitation d'au moins dudit précurseur hydrolysé dudit élément Y autour du tensioactif auto-organisé et en conséquence la structuration de la matrice du matériau selon l'invention. Les interactions des espèces inorganiques entre elles, des phases organique/inorganique et des espèces organiques entre elles conduisent par un mécanisme d'auto-assemblage coopératif à la condensation d'au moins dudit précurseur dudit élément Y hydrolysé autour du tensioactif auto-organisé. Lors de ce phénomène d'auto-assemblage, lesdites nanoparticules métalliques et éventuellement les nanocristaux zéolitiques se retrouvent piégés dans ladite matrice mésostructurée à base d'oxyde d'au moins dudit élément Y comprise dans chacune des particules sphériques élémentaires constituant le matériau de l'invention.

La technique aérosol est particulièrement avantageuse pour la mise en oeuvre de ladite étape b) du procédé de préparation de l'invention de manière à contraindre les réactifs présents dans la solution initiale à interagir entre eux, aucune perte de matière hormis les solvants, c'est-à-dire la solution, préférentiellement la solution aqueuse, préférentiellement acide, et éventuellement additionnée d'un solvant polaire, n'étant possible, la totalité du(es)dit(s) élément(s) Y, desdites nanoparticules métalliques et éventuellement des nanocristaux zéolithiques, présents initialement étant ainsi parfaitement conservée tout au long du procédé de préparation de l'invention au lieu d'être potentiellement éliminée lors des étapes de filtration et de lavages rencontrées dans des procédés de synthèse classiques connues de l'Homme du métier.

L'étape d'atomisation de la solution selon ladite étape b) du procédé de préparation selon l'invention produit des gouttelettes sphériques. La distribution en taille de ces gouttelettes est de type lognormale. Le générateur d'aérosol utilisé dans le cadre de la présente invention est un appareil commercial de modèle 9306 A fourni par TSI ayant un atomiseur 6 jets. L'atomisation de la solution se fait dans une chambre dans laquelle est envoyé un gaz vecteur, préférentiellement un mélange O₂/N₂ (air sec), sous une pression P égale à 1,5 bars. Le diamètre des gouttelettes varie en fonction de l'appareil aérosol employé. De manière générale, le diamètre des gouttelettes est compris entre 150 nm et 600 µm.

Conformément à l'étape c) du procédé de préparation selon l'invention, on procède au séchage desdites gouttelettes. Ce séchage est réalisé par le transport desdites gouttelettes par le gaz vecteur, préférentiellement le mélange O₂/N₂, dans des tubes en PVC, ce qui conduit à l'évaporation progressive de la solution, par exemple de la solution aquo-organique acide obtenue au cours de ladite étape a) et ainsi à l'obtention de particules élémentaires sphériques. Ce séchage est parfait par un passage desdites particules dans un four dont la température peut être ajustée, la gamme habituelle de température variant de 50 à 600°C et de préférence de 80 à 400°C, le temps de résidence de ces particules dans le four étant de l'ordre de la seconde. Les particules sont alors récoltées sur un filtre. Une pompe placée en fin de circuit favorise l'acheminement des espèces dans le dispositif expérimental aérosol. Le séchage des gouttelettes selon l'étape c) du procédé de préparation selon l'invention est avantageusement suivi d'un passage à l'étuve à une température comprise entre 50 et 150°C. Conformément à l'étape d) du procédé de préparation selon l'invention, l'élimination du tensioactif et éventuellement de l'agent structurant utilisé pour synthétiser lesdits nanocristaux zéolithiques, introduit(s) dans ladite étape a) du procédé de préparation selon l'invention, est avantageusement réalisée par traitement thermique et de préférence par calcination sous air (éventuellement enrichi en O₂) dans une gamme de température de 300 à 1000°C et plus précisément dans une gamme de 500 à 600°C pendant une durée de 1 à 24 heures et de façon préférée pendant une durée de 3 à 15 heures.

Selon un premier mode particulier de mise en oeuvre du procédé de préparation du matériau selon l'invention, au moins un composé soufré est introduit dans le mélange selon ladite étape a) ou à la suite de la mise en oeuvre de ladite étape d) de manière à obtenir le matériau inorganique mésostructuré selon l'invention, au moins en partie mais pas totalement, sous forme sulfure. Ledit composé soufré est choisi parmi les composés contenant au moins un atome de soufre et dont la décomposition à basse température (80-90°C) entraîne la formation de H₂S. Par exemple, ledit composé soufré est la thiourée ou la thioacétamide. Conformément audit premier mode particulier, la sulfuration dudit matériau selon l'invention est partielle de sorte que la présence de soufre dans ledit matériau inorganique mésostructuré n'affecte pas totalement la présence desdites nanoparticules métalliques.

Le matériau inorganique mésostructuré selon l'invention constitué de particules sphériques élémentaires comprenant des nanoparticules métalliques piégées dans une matrice mésostructurée à base d'oxyde d'au moins un élément Y, peut être mis en forme sous forme de poudre, de billes, de pastilles, de granulés, ou d'extrudés (cylindres creux ou non, cylindres multilobés à 2, 3, 4 ou 5 lobes par exemple, cylindres torsadés), ou d'anneaux, etc., ces opérations de mise en forme étant réalisées par les techniques classiques connues de l'Homme du métier. De préférence, le matériau selon l'invention est obtenu sous forme de poudre, laquelle est constituée de particules sphériques élémentaires ayant un diamètre maximal de 200 µm.

L'opération de mise en forme du matériau inorganique mésostructuré selon l'invention consiste à mélanger ledit matériau mésostructuré avec au moins un matériau oxyde poreux ayant le rôle de liant. Ledit matériau oxyde poreux est préférentiellement un matériau oxyde poreux choisi dans le groupe formé par l'alumine, la silice, la silice-alumine, la magnésie, les argiles, l'oxyde de titane, l'oxyde de zirconium, l'oxyde de lanthane, l'oxyde de cérium, les phosphates d'aluminium, les phosphates de bore et un mélange d'au moins deux des oxydes cités ci-dessus. Ledit matériau oxyde poreux peut également être choisi parmi les mélanges alumine-oxyde de bore, alumine-oxyde de titane, alumine-zircone et oxyde de titane-zircone. Les aluminates, par exemple les aluminates de magnésium, de calcium, de baryum, de manganèse, de fer, de cobalt, de nickel, de cuivre et de zinc, ainsi que les aluminates mixtes, par exemple ceux contenant au moins deux des métaux cités ci-dessus, sont avantageusement utilisés comme matériau oxyde poreux. On peut utiliser également les titanates, par exemple les titanates de zinc, nickel, cobalt. On peut aussi avantageusement employer des mélanges d'alumine et de silice et des mélanges d'alumine avec d'autres composés comme les éléments du groupe VIB, le phosphore, le fluor ou le bore. Il est encore possible d'employer des argiles simples, synthétiques ou naturelles de type phyllosilicate 2:1 dioctaédrique ou phyllosilicate 3:1 trioctaédrique telles que la kaolinite, l'antigorite, la chrysotile, la montmorillonnite, la beidellite, la vermiculite, le talc, l'hectorite, la saponite, la laponite. Ces argiles peuvent être éventuellement délaminées. On peut aussi avantageusement utiliser des mélanges d'alumine et d'argile et des mélanges de silice-alumine et d'argile. De même, il peut être envisagé d'utiliser comme liant au moins un composé choisi dans le groupe formé par la famille des tamis moléculaires de type aluminosilicate cristallisé et des zéolithes synthétiques et naturelles telles que la zéolithe Y, la zéolithe Y fluorée, la zéolithe Y contenant des terres rares, la zéolithe X, la zéolithe L, la zéolithe bêta, la mordénite à petits pores, la mordénite à grands pores, les zéolithes oméga, NU-10, ZSM-22, NU-86, NU-87, NU-88, et la zéolite ZSM-5. Parmi les zéolithes on préfère habituellement employer des zéolithes dont le rapport atome de charpente silicium/aluminium (Si/Al) est supérieur à environ 3/1. On emploie avantageusement des zéolithes de structure faujasite et en particulier les zéolithes Y stabilisées et ultrastabilisées (USY) soit sous forme au moins partiellement échangées avec des cations métalliques, par exemple des cations des métaux alcalino-terreux et/ou des cations de métaux de terres rares de numéro atomique 57 à 71 inclus, soit sous forme hydrogène (Atlas of zeolite framework types, 6th revised Edition, 2007, Ch. Baerlocher, L. B. McCusker, D. H. Olson). Enfin, on peut utiliser comme matériau oxyde poreux au moins un composé choisi dans le groupe formé par la famille des tamis moléculaires de type aluminosilicate non cristallisé tels que les silices mésoporeuses, la silicalite, les silicoaluminophosphates, les aluminophosphates, les ferrosilicates, les silicoaluminates de titane, les borosilicates, les chromosilicates et les aluminophosphates de métaux de transition (dont le cobalt). Les divers mélanges utilisant au moins deux des composés cités ci-dessus conviennent également pour assurer le rôle de liant.

Selon un deuxième mode particulier de mise en oeuvre du procédé de préparation du matériau selon l'invention, indépendant ou non dudit premier mode de mise en oeuvre, un ou plusieurs élément(s) additionnel(s) est introduit dans le mélange selon ladite étape a) du procédé de préparation selon l'invention, et/ou par imprégnation du matériau issu de ladite d) avec une solution contenant au moins ledit élément additionnel et/ou par imprégnation du matériau mésostructuré selon l'invention, préalablement mis en forme, avec une solution contenant au moins ledit élément additionnel. Ledit élément additionnel est choisi parmi les métaux du groupe VIII de la classification périodique des éléments, des agents organiques et des espèces dopantes appartenant à la liste des éléments dopants constitués par le phosphore, le fluor, le silicium et le bore. Conformément audit deuxième mode particulier, un ou plusieurs élément(s) additionnel(s) tel(s) que défini(s) ci-dessus est(sont) introduit(s) au cours de la mise en oeuvre du procédé de préparation du matériau selon l'invention en une ou plusieurs étapes. Dans le cas où ledit élément additionnel est introduit par imprégnation, la méthode d'imprégnation à sec est préférée. Chaque étape d'imprégnation est avantageusement suivie d'une étape de séchage, par exemple réalisée à une température comprise entre 90 et 200°C, ladite étape de séchage étant préférentiellement suivie d'une étape de calcination sous air, éventuellement enrichi en oxygène, par exemple réalisée à une température comprise entre 200 et 600°C, de préférence entre 300 et 500°C, pendant une durée comprise entre 1 et 12 heures, préférentiellement entre 2 et 6 heures. Les techniques d'imprégnation, notamment d'imprégnation à sec, d'un matériau solide avec une solution liquide sont bien connues de l'Homme du métier. Les espèces dopantes choisies parmi le phosphore, le fluor, le silicium et le bore ne présentent, en elles-mêmes, aucun caractère catalytique mais permettent d'accroître l'activité catalytique du(es) métal(ux) présent(s) dans lesdites nanoparticules métalliques, notamment lorsque le matériau se trouve sous forme sulfurée.

Les sources de métaux du groupe VIII utilisées en tant que précurseurs dudit élément additionnel à base d'au moins un métal du groupe VIII sont bien connues de l'Homme du métier. Parmi les métaux du groupe VIII, le cobalt et le nickel sont préférés. Par exemple, on utilisera les nitrates tels que le nitrate de cobalt et le nitrate de nickel, les sulfates, les hydroxydes tels que les hydroxydes de cobalt et les hydroxydes de nickel, les phosphates, les halogénures (par exemple, chlorures, bromures et fluorures) et les carboxylates (par exemple acétates et carbonates). De manière préférée, ladite source de métal du groupe VIII est utilisée en tant que deuxième précurseur monométallique dans ladite étape a) du procédé de préparation selon l'invention. Plus particulièrement, au moins ledit premier précurseur métallique, de préférence au moins ledit premier précurseur monométallique, à base d'un métal choisi parmi le molybdène et le tungstène et au moins ledit deuxième précurseur monométallique à base d'un métal du groupe VIII préférentiellement choisi parmi le nickel et le cobalt sont mis en solution préalablement à la mise en oeuvre de ladite étape a), ladite solution étant ensuite introduite dans le mélange selon ladite étape a) du procédé de préparation selon l'invention. De manière avantageuse, on utilise un premier précurseur monométallique à base de molybdène, par exemple MoCl₅, ou de tungstène, par exemple WCl₄, et un deuxième précurseur monométallique à base de nickel ou de cobalt, par exemple Ni(OH)₂ ou Co(OH)₂.

La source de bore utilisée en tant que précurseur de ladite espèce dopante à base de bore est de préférence choisie parmi les acides contenant du bore, par exemple l'acide orthoborique H₃BO₃, le biborate d'ammonium, le pentaborate d'ammonium, l'oxyde de bore et les esters boriques. Dans le cas où la source de bore est introduite par imprégnation, ladite étape d'imprégnation avec la source de bore est réalisée en utilisant par exemple une solution d'acide borique dans un mélange eau/alcool ou encore dans un mélange eau/éthanolamine. La source de bore peut également être imprégnée en utilisant un mélange formé d'acide borique, d'eau oxygénée et d'un composé organique basique contenant de l'azote tel que l'ammoniaque, les amines primaires et secondaires, les amines cycliques, les composés de la famille de la pyridine et des quinoléines et les composés de la famille du pyrrole.

La source de phosphore utilisée en tant que précurseur de ladite espèce dopante à base de phosphore est de préférence choisie parmi l'acide orthophosphorique H₃PO₄, ses sels et esters comme les phosphates d'ammonium. Dans le cas où la source de phosphore est introduite par imprégnation, ladite étape d'imprégnation avec la source de phosphore est réalisée en utilisant par exemple un mélange formé d'acide phosphorique et d'un composé organique basique contenant de l'azote tel que l'ammoniaque, les amines primaires et secondaires, les amines cycliques, les composés de la famille de la pyridine et des quinoléines et les composés de la famille du pyrrole.

De nombreuses sources de silicium peuvent être employées en tant que précurseurs de ladite espèce dopante à base de silicium. Ainsi, on peut utiliser l'orthosilicate d'éthyle Si(OEt)₄, les siloxanes, les polysiloxanes, les silicones, les émulsions de silicones, les silicates d'halogénures comme le fluorosilicate d'ammonium (NH₄)₂SiF₆ ou le fluorosilicate de sodium Na₂SiF₆. Dans le cas où la source de silicium est introduite par imprégnation, ladite étape d'imprégnation avec la source de silicium est réalisée en utilisant par exemple une solution de silicate d'éthyle dans un mélange eau/alcool. La source de silicium peut encore être imprégnée en utilisant un composé du silicium de type silicone ou l'acide silicique mis en suspension dans l'eau.

Les sources de fluor utilisées en tant que précurseurs de ladite espèce dopante à base de fluor sont bien connues de l'Homme du métier. Par exemple, les anions fluorures peuvent être introduits sous forme d'acide fluorhydrique ou de ses sels. Ces sels sont formés avec des métaux alcalins, l'ammonium ou un composé organique. Ils sont par exemple introduits au cours de l'étape a) du procédé de préparation du matériau selon l'invention. Dans le cas où la source de fluor est introduite par imprégnation, ladite étape d'imprégnation avec la source de fluor est réalisée en utilisant par exemple une solution aqueuse d'acide fluorhydrique ou de fluorure d'ammonium ou encore de bifluorure d'ammonium.

La répartition et la localisation desdites espèces dopantes choisies parmi le bore, le fluor, le silicium et le phosphore sont avantageusement déterminées par des techniques telles que la microsonde de Castaing (profil de répartition des divers éléments), la microscopie électronique par transmission couplée à une analyse X (c'est-à-dire une analyse EDX laquelle permet de connaître la composition élémentaire qualitative et/ou quantitative d'un échantillon à partir de la mesure par une diode Si(Li) des énergies des photons X émis par la région de l'échantillon bombardée par le faisceau d'électrons) des éléments présents dans le matériau inorganique mésostructuré selon l'invention, ou bien encore par l'établissement d'une cartographie de répartition des éléments présents dans ledit matériau par microsonde électronique. Ces techniques permettent de mettre en évidence la présence de ces espèces dopantes. L'analyse des métaux du groupe VIII et celle de l'espèce organique comme élément additionnel sont généralement réalisées par analyse élémentaire par fluorescence X.

Ladite espèce dopante appartenant à la liste des éléments dopants constitués par le phosphore, le fluor, le silicium, le bore et le mélange de ces éléments est introduite dans une quantité telle que la teneur totale en espèce dopante soit comprise entre 0,1 et 10% poids, de préférence entre 0,5 et 8% poids, et de manière encore plus préférée entre 0,5 et 6% poids, exprimé en % poids oxyde, par rapport au poids du matériau inorganique mésostructuré selon l'invention. Le rapport atomique entre l'espèce dopante et le(s) métal(ux) choisi(s) parmi Mo et W est de préférence compris entre 0,05 et 0,9, de manière encore plus préférée entre 0,08 et 0,8, l'espèce dopante et le(s) métal(ux) choisi(s) parmi Mo et W pris en compte pour le calcul de ce rapport correspondant à la teneur totale, dans le matériau selon l'invention, en espèce dopante et en métal(ux) choisi(s) parmi Mo et W, indépendamment du mode d'introduction.

Les agents organiques utilisés en tant que précurseurs dudit élément additionnel à base d'au moins un agent organique sont choisis parmi les agents organiques possédant des propriétés chélatantes ou non, réductrices ou non. Lesdits agents organiques sont par exemple les mono-, di- ou polyalcools éventuellement éthérifiés, les acides carboxyliques, les sucres, les mono, di ou polysaccharides non cycliques comme le glucose, le fructose, le maltose, le lactose ou le sucrose, les esters, les éthers, les éthers-couronnes, les composés contenant du soufre ou de l'azote comme l'acide nitriloacétique, l'acide ethylènediaminetetraactique, ou la diéthylenetriamine.

La présente invention a également pour objet un procédé de transformation d'une charge hydrocarbonée comprenant 1) la mise en contact du matériau inorganique mésostructuré selon l'invention avec une charge comprenant au moins un composé soufré puis ii) la mise en contact dudit matériau issu de ladite étape 2) avec ladite charge hydrocarbonée.

Conformément à ladite étape 1) du procédé de transformation selon l'invention, on réalise la sulfuration des nanoparticules métalliques, piégées au sein de la matrice de chacune des particules sphériques constituant le matériau inorganique mésostructuré selon l'invention. La transformation desdites nanoparticules métalliques, en leur phase active sulfurée associée est réalisée après traitement en température dudit matériau inorganique selon l'invention au contact d'hydrogène sulfuré à une température comprise entre 200 et 600°C et plus préférentiellement entre 300 et 500°C selon des procédés bien connus de l'Homme du métier. Plus précisément, ladite étape 1) de sulfuration selon le procédé de transformation selon l'invention est réalisée soit directement dans l'unité réactionnelle dudit procédé de transformation à l'aide d'une charge soufrée en présence d'hydrogène et d'hydrogène sulfuré (H₂S) introduit tel quel ou issu de la décomposition d'un composé soufré organique (sulfuration *in situ*) soit préalablement au chargement dudit matériau inorganique mésostructuré selon l'invention dans l'unité réactionnelle dudit procédé de transformation (sulfuration *ex situ*). Dans le cas d'une sulfuration *ex situ*, des mélanges gazeux tels que H₂/H₂S ou N₂/H₂S sont avantageusement utilisés pour la mise en oeuvre de ladite étape 1). Ledit matériau inorganique mésostructuré selon l'invention peut encore être sulfuré *ex situ* conformément à ladite étape 1) à partir de molécules en phase liquide, l'agent sulfurant étant alors choisi parmi les composés suivants : le diméthyldisulfure (DMDS), le diméthylsulfure, le n-butylmercaptan, les composés polysulfures de type tertiononylpolysulfure (par exemple TPS-37 ou TPS-54 commercialisés par la société ATOFINA), ceux-ci étant dilués dans une matrice organique composée de molécules aromatiques ou alkyles. Ladite étape 1) de sulfuration est préférentiellement précédée d'une étape de traitement thermique dudit matériau inorganique selon l'invention selon des méthodes bien connues de l'Homme du métier, de préférence par calcination sous air dans une gamme de température comprise entre 300 et 1000°C et plus précisément dans une gamme comprise entre 500 et 600°C pendant une durée de 1 à 24 heures et de façon préférée pendant une durée de 6 à 15 heures.

Conformément à l'invention, ladite charge hydrocarbonée soumise au procédé de transformation selon l'invention comprend des molécules contenant au moins des atomes d'hydrogène et de carbone en une teneur telle que lesdits atomes représentent au moins 80% poids, de préférence au moins 85% poids, de ladite charge. Ladite charge comprend des molécules contenant avantageusement, outre des atomes d'hydrogène et des atomes de carbone, des hétéroéléments préférentiellement choisis parmi l'azote, l'oxygène et/ou le soufre.

Les différents procédés de transformation de charges hydrocarbonées dans lesquels le matériau inorganique sous forme sulfurée, issu de ladite étape 1), est avantageusement mis en oeuvre sont en particulier les procédés d'hydrotraitement, plus particulièrement les procédés d'hydrodésulfuration et d'hydrodéazotation, et les procédés d'hydroconversion, plus particulièrement d'hydrocraquage, de charges hydrocarbonées comprenant des hydrocarbures aliphatiques saturés et insaturés, des hydrocarbures aromatiques, des composés organiques oxygénés et des composés organiques contenant de l'azote et/ou du soufre ainsi que des composés organiques contenant d'autres groupes fonctionnels. Plus particulièrement, ledit matériau inorganique sous forme sulfurée, issu de ladite étape 1), est avantageusement mis en oeuvre dans des procédés d'hydrotraitement de charges hydrocarbonées de type essence et distillats moyens (gazole et kérosène) et des procédés d'hydroconversion et/ou d'hydrotraitement de coupes hydrocarbonées lourdes telles que des distillats sous vide, des huiles désalphatées, des résidus atmosphériques ou des résidus sous vide. Ledit matériau inorganique sous forme sulfurée, issu de ladite étape 1), est encore avantageusement mis en oeuvre dans un procédé d'hydrotraitement d'une charge hydrocarbonée comprenant des triglycérides.

Le matériau inorganique mésostructuré selon l'invention constitué de particules sphériques élémentaires comprenant des nanoparticules métalliques, piégées dans une matrice oxyde mésostructurée, présentant une porosité organisée et uniforme dans le domaine de la mésoporosité, est caractérisé par plusieurs techniques d'analyses et notamment par diffraction des rayons X aux bas angles (DRX aux bas angles), par diffraction des rayons X aux grands angles (DRX), par volumétrie à l'azote (BET), par microscopie électronique à transmission (MET), par microscopie électronique à balayage (MEB), par fluorescence X (FX). La présence de nanoparticules métalliques est mise en évidence par différentes techniques, en particulier par les spectroscopies Raman, UV-visible ou encore infrarouge ainsi que par microanalyse. La spectroscopie par résonance magnétique nucléaire (RMN), en particulier la RMN du ⁹⁵Mo et du ¹⁸³W, est également avantageusement utilisée pour caractériser les nanoparticules métalliques.

La technique de diffraction des rayons X aux bas angles (valeurs de l'angle 2θ comprises entre 0,5 et 5°) permet de caractériser la périodicité à l'échelle nanométrique générée par la mésoporosité organisée de la matrice mésostructurée du matériau de l'invention. Dans l'exposé qui suit, l'analyse des rayons X est réalisée sur poudre avec un diffractomètre opérant en réflexion et équipé d'un monochromateur arrière en utilisant la radiation du cuivre (longueur d'onde de 1,5406 Å). Les pics habituellement observés sur les diffractogrammes correspondants à une valeur donnée de l'angle 2θ sont associés aux distances inter réticulaires d₍ₕₖₗ₎ caractéristiques de la symétrie structurale du matériau ((hkl) étant les indices de Miller du réseau réciproque) par la relation de Bragg : 2 d₍ₕₖₗ₎ ^{∗} sin (θ) = n ^{∗} λ. Cette indexation permet alors la détermination des paramètres de maille (abc) du réseau direct, la valeur de ces paramètres étant fonction de la structure hexagonale, cubique, ou vermiculaire obtenue. A titre d'exemple, le diffractogramme de rayons X aux bas angles d'un matériau mésostructuré selon l'invention constitué de particules sphériques élémentaires comportant une matrice mésostructurée oxyde à base de silicium et d'aluminium obtenu selon le procédé de préparation selon l'invention via l'emploi du tensioactif non ionique qu'est le copolymère F127 présente un pic de corrélation parfaitement résolu correspondant à la distance de corrélation entre pores d caractéristique d'une structure de type vermiculaire et définie par la relation de Bragg 2 d₍ₕₖₗ₎ ^{∗} sin (θ) = n ^{∗} λ.

La technique de Diffraction des Rayons X aux grands angles (valeurs de l'angle 2θ comprises entre 6 et 100°) permet de caractériser un solide cristallisé défini par la répétition d'un motif unitaire ou maille élémentaire à l'échelle moléculaire. Elle suit le même principe physique que celui régissant la technique de diffraction des Rayons X aux bas angles. La technique DRX aux grands angles est donc utilisée pour analyser les matériaux de l'invention car elle est tout particulièrement adaptée à la caractérisation structurale des nanocristaux zéolithiques éventuellement présents dans chacune des particules sphériques élémentaires constituant le matériau défini selon l'invention. En particulier, elle permet d'accéder à la taille cristallites et aux paramètres de mailles de ces nanocristaux zéolithiques. Pour exemple, lors de l'occlusion éventuelle de nanocristaux de zéolithe du type ZSM-5 (MFI), le diffractogramme aux grand angles associés présente les pics attribués au groupe de symétrie Pnma (N°62) de la zéolithe ZSM-5. La valeur de l'angle obtenue sur le diffractogramme RX permet de remonter à la distance de corrélation d selon la loi de Bragg : 2 d₍ₕₖₗ₎ ^{∗} sin (θ) = n ^{∗} λ.

La volumétrie à l'azote correspondant à l'adsorption physique de molécules d'azote dans la porosité du matériau via une augmentation progressive de la pression à température constante renseigne sur les caractéristiques texturales (diamètre de pores, volume poreux, surface spécifique) particulières du matériau selon l'invention. En particulier, elle permet d'accéder à la surface spécifique et à la distribution mésoporeuse du matériau. On entend par surface spécifique, la surface spécifique B.E.T. (S_{BET} en m²/g) déterminée par adsorption d'azote conformément à la norme ASTM D 3663-78 établie à partir de la méthode BRUNAUER-EMMETT-TELLER décrite dans le périodique "The Journal of American Society", 1938, 60, 309. La distribution poreuse représentative d'une population de mésopores centrée dans une gamme de 2 à 50 nm (classification IUPAC) est déterminée par le modèle Barrett-Joyner-Halenda (BJH). L'isotherme d'adsorption - désorption d'azote selon le modèle BJH ainsi obtenue est décrite dans le périodique "The Journal of American Society", 1951, 73, 373, écrit par E. P. Barrett, L. G. Joyner et P. P. Halenda. Dans l'exposé qui suit, le diamètre des mésospores φ de la matrice mésostructurée correspond au diamètre maximum visualisé sur la distribution poreuse obtenue à partir de la branche à l'adsorption de l'isotherme d'azote. De plus, l'allure de l'isotherme d'adsorption d'azote et de la boucle d'hystérésis peuvent renseigner sur la nature de la mésoporosité et sur la présence éventuelle de microporosité liée essentiellement aux nanocristaux zéolithiques lorsqu'ils sont présents dans la matrice oxyde mésostructurée. A titre d'exemple, l'isotherme d'adsorption d'azote relative à un matériau mésostructuré selon l'invention, obtenu selon le procédé de préparation selon l'invention et constitué de particules sphériques élémentaires comportant une matrice mésostructurée oxyde à base d'aluminium et de silicium préparée via l'emploi du tensioactif non ionique qu'est le copolymère F127 est caractérisée par une isotherme d'adsorption de classe IVc (classification IUPAC) avec présence d'une marche d'adsorption pour des valeurs de P/P0 (où P0 est la pression de vapeur saturante à la température T) comprises entre 0,2 et 0,3 associée à la présence de pores de l'ordre de 2 à 3 nm comme confirmée par la courbe de distribution poreuse associée.

Concernant la matrice mésostructurée, la différence entre la valeur du diamètre des pores φ et le paramètre de maille a défini par DRX aux bas angles comme décrit ci-dessus permet d'accéder à la grandeur e où e = a - φ et est caractéristique de l'épaisseur des parois amorphes de la matrice mésostructurée comprises dans chacune des particules sphériques du matériau selon l'invention. Ledit paramètre de maille a est relié à la distance d de corrélation entre pores par un facteur géométrique caractéristique de la géométrie de la phase. Pour exemple, dans le cas d'une structure vermiculaire e = d - φ.

L'analyse par microscopie électronique par transmission (MET) est une technique également utilisée pour caractériser la structure de ces matériaux. Celle-ci permet la formation d'une image du solide étudié, les contrastes observés étant caractéristiques de l'organisation structurale, de la texture ou bien de la morphologie des particules observées, la résolution de la technique atteignant au maximum 1 nm. Dans l'exposé qui suit, les photos MET seront réalisées à partir de coupes microtomes de l'échantillon afin de visualiser une section d'une particule sphérique élémentaire du matériau selon l'invention. A titre d'exemple, les images MET obtenues pour un matériau selon l'invention constitué de particules sphériques élémentaires comprenant des nanoparticules métalliques piégées dans une matrice mésostructurée à base d'oxyde de silicium et d'aluminium laquelle a été préparée via l'emploi du tensioactif non ionique qu'est le copolymère F127 présentent au sein d'une même particule sphérique une mésostructure vermiculaire (la matière étant définie par des zones sombres) au sein de laquelle sont éventuellement visualisés des objets opaques représentant les nanocristaux zéolithiques piégées dans la matrice mésostructurée. L'analyse de l'image permet également d'accéder aux paramètres d, φ et e, caractéristiques de la matrice mésostructurée définis précédemment.

La morphologie et la distribution en taille des particules élémentaires ont été établies par analyse de photos obtenues par microscopie électronique à balayage (MEB).

La mésostructuration du matériau selon l'invention peut être vermiculaire, cubique ou hexagonale en fonction de la nature du tensioactif choisi comme agent structurant.

Les nanoparticules métalliques sont en particulier caractérisées par spectroscopie Raman. Les spectres Raman ont été obtenus avec un spectromètre de type Raman dispersif équipé d'un laser de longueur d'onde excitatrice de 532 nm. Le faisceau laser est focalisé sur l'échantillon à l'aide d'un microscope équipé d'un objectif × 50 longue distance de travail. La puissance du laser au niveau de l'échantillon est de l'ordre de 1 mW. Le signal Raman émis par l'échantillon est collecté par le même objectif et est dispersé à l'aide d'un réseau 1800 tr/min puis collecté par un détecteur CCD (Charge Coupled Device ou Dispositif à Transfert de Charges). La résolution spectrale obtenue est de l'ordre de 2 cm⁻¹. La zone spectrale enregistrée est comprise entre 300 et 1500 cm⁻¹. La durée d'acquisition a été fixée à 120 s pour chaque spectre Raman enregistré.

L'invention est illustrée au moyen des exemples qui suivent.

### Exemples

Dans les exemples qui suivent, la technique aérosol utilisée est celle décrite ci-dessus dans l'exposé de l'invention. Le spectromètre Raman dispersif utilisé est un appareil commercial LabRAM Aramis fourni par la société Horiba Jobin-Yvon. Le laser utilisé possède une longueur d'onde excitatrice de 532 nm. Le fonctionnement de ce spectrographe, pour la réalisation des exemples 1 à 5 qui suivent, a été décrit ci-dessus.

### Exemple 1 (invention) : Préparation d'un matériau comprenant des nanoparticules métalliques à base de molybdène et de cobalt à 6% en poids de MoO₃ et 1,2% en poids de CoO par rapport au matériau final. La matrice est un oxyde mésostructuré à base d'aluminium et de silicium de rapport molaire Si/Al = 12.

Une solution aqueuse contenant 0,29 g de MoCl₅, 0,04 g de Co(OH)₂ et 15,0 g d'eau permutée est préparée sous agitation à température ambiante.

0,69 g de trichlorure d'aluminium sont mélangés à 12,1 g d'eau permutée et 4,40 mg d'HCl. Après 5 minutes d'agitation à température ambiante, 7,16 g de TEOS sont ajoutés. La solution est laissée à hydrolyser pendant 16 h sous agitation à température ambiante. Une autre solution est préparée en mélangeant 2,41 g de F127 (Sigma-Aldrich) dans 22,4 g d'eau permutée, 8,20 mg d'HCl et 5,29 g d'éthanol.

A l'issue de l'hydrolyse de la solution contenant les précurseurs de la matrice, la solution aquo-organique de F127 est ajoutée. Après 5 min d'homogénéisation, la solution contenant le MoCl₅ et le Co(OH)₂ est ajoutée goutte à goutte.

Le mélange est laissé sous agitation pendant 30 min puis est envoyé dans la chambre d'atomisation du générateur d'aérosol et la solution est pulvérisée sous la forme de fines gouttelettes sous l'action du gaz vecteur (air sec) introduit sous pression (P = 1,5 bars). Les gouttelettes sont séchées selon le protocole décrit dans l'exposé de l'invention ci-dessus : elles sont acheminées via un mélange O₂/N₂ dans des tubes PVC. La température du four de séchage est fixée à 350°C. La poudre récoltée est alors calcinée sous air pendant 5 h à T = 550°C. Le solide est caractérisé par DRX aux bas angles, par volumétrie à l'azote, par MET, par MEB, par FX et par spectroscopie Raman. L'analyse MET montre que le matériau final présente une mésoporosité organisée caractérisée par une structure vermiculaire. L'analyse MET ne permet de détecter la présence d'aucune nanoparticules métalliques, signifiant que lesdites nanoparticules présentent une taille inférieure à 1 nm. L'analyse par Volumétrie à l'azote conduit à une surface spécifique du matériau final de S_{BET} = 160 m²/g et à un diamètre mésoporeux de 9,6 nm. L'analyse DRX aux petits angles conduit à la visualisation d'un pic de corrélation à l'angle 2θ = 0,70. La relation de Bragg 2 d ^{∗} sin (0,35) = 1,5406 permet de calculer la distance d de corrélation entre les pores de la matrice mésostructurée, soit d = 12,6 nm. L'épaisseur des parois de la matrice du matériau mésostructuré définie par e = d - φ est donc de e = 3 nm. Le rapport molaire Si/Al obtenu par FX est de 12. Un cliché MEB des particules élémentaires sphériques ainsi obtenues indique que ces particules ont une taille caractérisée par un diamètre variant de 50 à 700 nm, la distribution en taille de ces particules étant centrée autour de 300 nm. Le spectre Raman du matériau final révèle la présence d'espèces polymolybdates, en interaction avec la matrice, avec des bandes caractéristiques de ces espèces à 950 et 886 cm⁻¹.

### Exemple 2 (invention) : Préparation d'un matériau comprenant des nanoparticules métalliques à base de tungstène et de nickel à 5,0% en poids de WO₃ et 1,0% en poids de NiO par rapport au matériau final. La matrice est un oxyde mésostructuré à base d'aluminium et de silicium de rapport molaire Si/Al = 25.

Une solution aqueuse contenant 0,17 g de WCl₄, 0,02 g de Ni(OH)₂ et 15,0 g d'eau permutée est préparée sous agitation à température ambiante.

0,35 g de trichlorure d'aluminium sont mélangés à 12,1 g d'eau permutée et 4,40 mg d'HCl. Après 5 minutes d'agitation à température ambiante, 7,58 g de TEOS sont ajoutés. La solution est laissée à hydrolyser pendant 16 h sous agitation à température ambiante. Une autre solution est préparée en mélangeant 2,23 g de P123 (Sigma-Aldrich) dans 22,4 g d'eau permutée, 8,20 mg d'HCl et 5,30 g d'éthanol.

A l'issue de l'hydrolyse de la solution contenant les précurseurs de la matrice, la solution aquo-organique de P123 est ajoutée. Après 5 min d'homogénéisation, la solution contenant le WCl₄ et le Ni(OH)₂ est ajoutée goutte à goutte.

Le mélange est laissé sous agitation pendant 30 min puis est envoyé dans la chambre d'atomisation du générateur d'aérosol et la solution est pulvérisée sous la forme de fines gouttelettes sous l'action du gaz vecteur (air sec) introduit sous pression (P = 1,5 bars). Les gouttelettes sont séchées selon le protocole décrit dans l'exposé de l'invention ci-dessus : elles sont acheminées via un mélange O₂/N₂ dans des tubes PVC. La température du four de séchage est fixée à 350°C. La poudre récoltée est alors calcinée sous air pendant 5 h à T = 550°C. Le solide est caractérisé par DRX aux bas angles, par Volumétrie à l'azote, par MET, par MEB, par FX et par spectroscopie Raman. L'analyse MET montre que le matériau final présente une mésoporosité organisée caractérisée par une structure vermiculaire. L'analyse MET ne permet de détecter la présence d'aucune nanoparticules métalliques, signifiant que lesdites nanoparticules présentent une taille inférieure à 1 nm. L'analyse par volumétrie à l'azote conduit à une surface spécifique du matériau final de S_{BET} = 173 m²/g et à un diamètre mésoporeux de 7,5 nm. L'analyse DRX aux petits angles conduit à la visualisation d'un pic de corrélation à l'angle 2θ = 0,78. La relation de Bragg 2 d ^{∗} sin (0,39) = 1,5406 permet de calculer la distance d de corrélation entre les pores de la matrice mésostructurée, soit d = 11,3 nm. L'épaisseur des parois de la matrice du matériau mésostructuré définie par e = d - φ est donc de e = 3,8 nm. Le rapport molaire Si/Al obtenu par FX est de 25. Un cliché MEB des particules élémentaires sphériques ainsi obtenues indique que ces particules ont une taille caractérisée par un diamètre variant de 50 à 700 nm, la distribution en taille de ces particules étant centrée autour de 300 nm. Le spectre Raman du matériau final révèle la présence d'espèces polytungstates, en interaction avec la matrice, avec des bandes caractéristiques de ces espèces à 945 et 881 cm⁻¹.

### Exemple 3 : (invention) : Préparation d'un matériau comprenant des nanoparticules métalliques à base de tungstène et de nickel à 9,3% en poids de WO₃ et 1,9% en poids de NiO par rapport au matériau final. La matrice est un oxyde mésostructuré à base de zirconium et de silicium de rapport molaire Si/Zr = 10.

Une solution aqueuse contenant 0,35 g de WCl₄, 0,04 g de Ni(OH)₂ et 15,0 g d'eau permutée est préparée sous agitation à température ambiante.

0,79 g de tétrachlorure de zirconium sont mélangés à 12,1 g d'eau permutée. Après refroidissement sous agitation à température ambiante, 7,05 g de TEOS sont ajoutés. La solution est laissée à hydrolyser pendant 1 h sous agitation à température ambiante. Une autre solution est préparée en mélangeant 2,41 g de F127 (Sigma-Aldrich) dans 22,4 g d'eau permutée et 5,29 g d'éthanol.

A l'issue de l'hydrolyse de la solution contenant les précurseurs de la matrice, la solution aquo-organique de F127 est ajoutée. Après 5 min d'homogénéisation, la solution contenant le WCl₄ et le Ni(OH)₂ est ajoutée goutte à goutte.

Le mélange est laissé sous agitation pendant 30 min puis est envoyé dans la chambre d'atomisation du générateur d'aérosol et la solution est pulvérisée sous la forme de fines gouttelettes sous l'action du gaz vecteur (air sec) introduit sous pression (P = 1,5 bars). Les gouttelettes sont séchées selon le protocole décrit dans l'exposé de l'invention ci-dessus : elles sont acheminées via un mélange O₂/N₂ dans des tubes PVC. La température du four de séchage est fixée à 350°C. La poudre récoltée est alors calcinée sous air pendant 5 h à T = 550°C. Le solide est caractérisé par DRX aux bas angles, par volumétrie à l'azote, par MET, par MEB, par FX et par spectroscopie Raman. L'analyse MET montre que le matériau final présente une mésoporosité organisée caractérisée par une structure vermiculaire. L'analyse MET ne permet de détecter la présence d'aucune nanoparticules métalliques, signifiant que lesdites nanoparticules présentent une taille inférieure à 1 nm. L'analyse par volumétrie à l'azote conduit à une surface spécifique du matériau final de S_{BET} = 187 m²/g et à un diamètre mésoporeux de 8,0 nm. L'analyse DRX aux petits angles conduit à la visualisation d'un pic de corrélation à l'angle 2θ = 0,60. La relation de Bragg 2 d ^{∗} sin (0,30) = 1,5406 permet de calculer la distance d de corrélation entre les pores de la matrice mésostructurée, soit d = 14,6 nm. L'épaisseur des parois de la matrice du matériau mésostructuré définie par e = d - φ est donc de e = 6,2 nm. Le rapport molaire Si/Zr obtenu par FX est de 10. Un cliché MEB des particules élémentaires sphériques ainsi obtenues indique que ces particules ont une taille caractérisée par un diamètre variant de 50 à 700 nm, la distribution en taille de ces particules étant centrée autour de 300 nm. Le spectre Raman du matériau final révèle la présence d'espèces polytungstates, en interaction avec la matrice, avec des bandes caractéristiques de ces espèces à 942 et 879 cm⁻¹.

### Exemple 4 (invention) : Préparation d'un matériau comprenant des nanoparticules métalliques à base de molybdène et de cobalt à 9,0% en poids de MoO₃ et 1,9% en poids de CoO par rapport au matériau final. La matrice est un oxyde mésostructuré à base d'aluminium et de silicium de rapport molaire Si/Al = 25 contenant des nanocristaux de type ZSM-5 de rapport molaire Si/Al = 50 à 5% en poids par rapport au matériau final.

0,14 g de tri-sec-butoxyde d'aluminium sont ajoutés à une solution contenant 3,50 ml d'hydroxyde de TPAOH, 0,01 g de soude NaOH et 4,30 ml d'eau. Après dissolution de l'alcoxyde d'aluminium, 5,90 g de tetraéthylorthosilicate (TEOS) sont ajoutés. La solution est agitée à température ambiante pendant 5 h puis est autoclavée à T = 95°C pendant 12 h. La solution blanche obtenue contient des nanocristaux de ZSM-5 ayant une taille de 135 nm, mesurée par diffusion de la lumière (ou DLS, dynamic light scattering). Cette solution est centrifugée à 20000 tours/min pendant 30 minutes. Le solide est redispersé dans de l'eau puis centrifugé de nouveau à 20000 tours/min pendant 30 minutes. Ce lavage est effectué deux fois. Les nanocristaux forment un gel séché à l'étuve une nuit à 60°C.

Une solution aqueuse contenant 0,43 g de MoCl₅, 0,06 g de Co(OH)₂ et 15,0 g d'eau permutée est préparée sous agitation à température ambiante.

0,34 g de trichlorure d'aluminium sont mélangés à 12,1 g d'eau permutée et 4,40 mg d'HCl. Après 5 min d'agitation à température ambiante, 7,38 g de TEOS sont ajoutés. La solution est laissée à hydrolyser pendant 16 h sous agitation à température ambiante. Une autre solution est préparée en mélangeant 2,42 g de F127 (Sigma-Aldrich) dans 22,5 g d'eau permutée, 8,20 mg d'HCl et 5,31 g d'éthanol dans la quelle est redispersé 0,143 g de nanocristaux de zéolithe ZSM-5.

A l'issue de l'hydrolyse de la solution contenant les précurseurs de la matrice, la solution aquo-organique de F127, contenant les nanocristaux de zéolithe ZSM-5, est ajoutée. Après 5 min d'agitation à température ambiante, la solution contenant le MoCl₅ et le Co(OH)₂ est ajoutée goutte à goutte.

Le mélange est laissé sous agitation pendant 30 min puis est envoyé dans la chambre d'atomisation du générateur d'aérosol et la solution est pulvérisée sous la forme de fines gouttelettes sous l'action du gaz vecteur (air sec) introduit sous pression (P = 1,5 bars). Les gouttelettes sont séchées selon le protocole décrit dans l'exposé de l'invention ci-dessus : elles sont acheminées via un mélange O₂/N₂ dans des tubes PVC. La température du four de séchage est fixée à 350°C. La poudre récoltée est alors calcinée sous air pendant 5 h à T = 550°C. Le solide est caractérisé par DRX aux bas angles et aux grands angles, par Volumétrie à l'azote, par MET, par MEB, par FX et par spectroscopie Raman. L'analyse MET montre que le matériau final présente une mésoporosité organisée caractérisée par une structure vermiculaire dans laquelle sont piégés des nanocristaux de zéolithes de taille de 135 nm. L'analyse MET ne permet de détecter la présence d'aucune nanoparticules métalliques, signifiant que lesdites nanoparticules présentent une taille inférieure à 1 nm. L'analyse par Volumétrie à l'azote conduit à une surface spécifique du matériau final de S_{BET} = 260 m²/g et à un diamètre mésoporeux de 9,0 nm. L'analyse DRX aux petits angles conduit à la visualisation d'un pic de corrélation à l'angle 2θ = 0,67. La relation de Bragg 2 d ^{∗} sin (0,33) = 1,5406 permet de calculer la distance d de corrélation entre les pores de la matrice mésostructurée, soit d = 13,1 nm. L'épaisseur des parois du matériau mésostructuré définie par e = d - φ est donc de e = 4,1 nm. L'analyse DRX aux grands angles conduit à l'obtention du diffractogramme caractéristique de la zéolithe ZSM-5. Le rapport molaire Si/Al de la matrice est de 25 et celui des nanocristaux de ZSM-5 est égal à 50. Ces deux rapports molaires Si/Al sont déterminés par analyse MET couplée à l'EDX. Un cliché MEB des particules élémentaires sphériques ainsi obtenues indique que ces particules ont une taille caractérisée par un diamètre variant de 50 à 700 nm, la distribution en taille de ces particules étant centrée autour de 300 nm. Le spectre Raman du matériau final révèle la présence d'espèces polymolybdates, en interaction avec la matrice, avec des bandes caractéristiques de ces espèces à 953 et 890 cm⁻¹.

### Exemple 5 (invention) : Préparation d'un matériau comprenant des nanoparticules métalliques à base de tungstène et de nickel à 6% en poids de WO₃ et 1,25% en poids de NiO par rapport au matériau final. La matrice est un oxyde mésostructuré à base d'aluminium et de silicium de rapport molaire Si/Al=12 contenant des nanocristaux de zéolithe de type ZSM-5 de rapport molaire Si/Al = 50 à 5% en poids par rapport au matériau final.

0,14 g de tri-sec-butoxyde d'aluminium sont ajoutés à une solution contenant 3,50 ml d'hydroxyde de TPAOH, 0,01 g de soude NaOH et 4,30 ml d'eau. Après dissolution de l'alcoxyde d'aluminium, 5,90 g de tetraéthylorthosilicate (TEOS) sont ajoutés. La solution est agitée à température ambiante pendant 5 h puis est autoclavée à T = 95°C pendant 12 h. La solution blanche obtenue contient des nanocristaux de ZSM-5 de taille , mesurée par DLS, égale à 135 nm. Cette solution est centrifugée à 20000 trs/min pendant 30 minutes. Le solide est redispersé dans de l'eau puis centrifugé de nouveau à 20000 trs/min pendant 30 minutes. Ce lavage est effectué deux fois. Les nanocristaux forment un gel séché à l'étuve une nuit à 60°C.

Une solution aqueuse contenant 0,21 g de WCl₄, 0,02 g de Ni(OH)₂ et 15,0 g d'eau permutée est préparée sous agitation à température ambiante.

0,70 g de trichlorure d'aluminium sont mélangés à 12,0 g d'eau permutée et 4,40 mg d'HCl. Après 5 min d'agitation à température ambiante, 7,22 g de TEOS sont ajoutés. La solution est laissée à hydrolyser pendant 16 h sous agitation à température ambiante. Une autre solution est préparée en mélangeant 2,41 g de F127 (Sigma-Aldrich) dans 22,3 g d'eau permutée, 8,20 mg d'HCl et 5,28 g d'éthanol dans laquelle est redispersé 0,139 g de nanocristaux de zéolithe ZSM-5.

A l'issue de l'hydrolyse de la solution contenant les précurseurs de la matrice, la solution aquo-organique de F127 contenant les nanocristaux de ZSM-5 est ajoutée. Après 5 min d'agitation à température ambiante, la solution contenant le WCl₄ et le Ni(OH)₂ est ajoutée goutte à goutte.

Le mélange est laissé sous agitation pendant 30 min puis est envoyé dans la chambre d'atomisation du générateur d'aérosol et la solution est pulvérisée sous la forme de fines gouttelettes sous l'action du gaz vecteur (air sec) introduit sous pression (P = 1,5 bars). Les gouttelettes sont séchées selon le protocole décrit dans l'exposé de l'invention ci-dessus : elles sont acheminées via un mélange O₂/N₂ dans des tubes PVC. La température du four de séchage est fixée à 350°C. La poudre récoltée est alors calcinée sous air pendant 5 h à T = 550°C. Le solide est caractérisé par DRX aux bas angles et aux grands angles, par volumétrie à l'azote, par MET, par MEB, par FX et par spectroscopie Raman. L'analyse MET montre que le matériau final présente une mésoporosité organisée caractérisée par une structure vermiculaire dans laquelle sont piégés des nanocristaux de zéolithes de taille de 135 nm. L'analyse MET ne permet de détecter la présence d'aucune nanoparticules métalliques, signifiant que lesdites nanoparticules présentent une taille inférieure à 1 nm. L'analyse par volumétrie à l'azote conduit à une surface spécifique du matériau final de S_{BET} = 277 m²/g et à un diamètre mésoporeux de 9,2 nm. L'analyse DRX aux petits angles conduit à la visualisation d'un pic de corrélation à l'angle 2θ = 0,64. La relation de Bragg 2 d ^{∗} sin (0,32) = 1,5406 permet de calculer la distance d de corrélation entre les pores de la matrice mésostructurée, soit d = 13,6 nm. L'épaisseur des parois de la matrice du matériau mésostructuré définie par e = d - φ est donc de e = 4,4 nm. L'analyse DRX aux grands angles conduit à l'obtention du diffractogramme caractéristique de la zéolithe ZSM-5. Le rapport molaire Si/Al de la matrice est de 12 et celui des nanocristaux de ZSM-5 est égal à 50. Ces deux rapports molaires Si/Al sont déterminés par analyse MET couplée à l'EDX. Un cliché MEB des particules élémentaires sphériques ainsi obtenues indique que ces particules ont une taille caractérisée par un diamètre variant de 50 à 700 nm, la distribution en taille de ces particules étant centrée autour de 300 nm. Le spectre Raman du matériau final révèle la présence d'espèces polytungstates, en interaction avec la matrice, avec des bandes caractéristiques de ces espèces à 944 et 883 cm⁻¹.

## Revendications

1. Matériau inorganique constitué d'au moins deux particules sphériques élémentaires, chacune desdites particules sphériques comprenant des nanoparticules métalliques présentant au moins une bande de nombre d'ondes compris entre 750 et 1050 cm⁻¹ en spectroscopie Raman, choisies parmi des espèces monomolybdiques, des espèces monotungstiques, des espèces polymolybdiques ou des espèces polytungstiques, lesdites nanoparticules métalliques étant présentes au sein d'une matrice mésostructurée à base d'oxyde d'au moins un élément Y choisi dans le groupe constitué par le silicium, l'aluminium, le titane, le zirconium, le gallium, le germanium, le cérium, et le mélange d'au moins deux de ces éléments, ladite matrice présentant des pores de diamètre compris entre 1,5 et 50 nm et présentant des parois amorphes d'épaisseur comprise entre 1 et 30 nm, lesdites particules sphériques élémentaires ayant un diamètre maximal de 200 microns et lesdites nanoparticules métalliques ayant une taille maximale strictement inférieure à 1 nm, lesdites nanoparticules métalliques n'étant pas détectées par microscopie électronique en transmission (MET).

2. Matériau selon la revendication 1 dans lequel ladite matrice mésostructurée est constituée d'oxyde d'aluminium, d'oxyde de silicium, d'un mélange d'oxyde de silicium et d'oxyde d'aluminium ou d'un mélange d'oxyde de silicium et d'oxyde de zirconium.

3. Matériau selon la revendication 1 ou la revendication 2 dans lequel ladite matrice présente des pores de diamètre compris entre 4 et 20 nm.

4. Matériau selon l'une des revendications 1 à 3 dans lequel ladite matrice présente des parois amorphes d'épaisseur comprise entre 1 et 10 nm.

5. Matériau selon l'une des revendications 1 à 4 dans lequel lesdites nanoparticules métalliques présentent au moins une bande de nombre d'ondes compris entre 750 et 950 cm⁻¹ ou entre 950 et 1050 cm⁻¹ en spectroscopie Raman.

6. Matériau selon l'une des revendications 1 à 5 dans lequel chacune des particules sphériques comprend des nanocristaux zéolithiques représentant de 0,1 à 30% poids dudit matériau.

7. Matériau selon la revendication 6 dans lequel lesdits nanocristaux zéolithiques comprennent au moins une zéolithe choisie parmi les zéolithes de type structural MFI, BEA, FAU et LTA.

8. Matériau selon l'une des revendications 1 à 7 dans lequel chacune des particules sphériques comprend un ou plusieurs élément(s) additionnel(s) choisi(s) parmi des agents organiques, les métaux du groupe VIII de la classification périodique des éléments et des espèces dopantes appartenant à la liste des éléments dopants constitués par le phosphore, le fluor, le silicium et le bore et leurs mélanges.

9. Matériau selon la revendication 8 tel que ledit métal du groupe VIII en tant qu'élément additionnel est choisi parmi le cobalt, le nickel et le mélange de ces deux métaux.

10. Matériau selon l'une des revendications 1 à 9 tel qu'il présente une surface spécifique comprise entre 50 et 1100 m²/g.

11. Procédé de préparation d'un matériau inorganique selon l'une des revendications 1 à 10 comprenant au moins les étapes successives suivantes :
a) le mélange en solution
- d'au moins un tensioactif,
- d'au moins un précurseur d'au moins un élément Y choisi dans le groupe constitué par le silicium, l'aluminium, le titane, le zirconium, le gallium, le germanium, le cérium et le mélange d'au moins deux de ces éléments,
- d'au moins un premier précurseur métallique choisi parmi un premier précurseur monométallique à base de molybdène ou de tungstène,
- éventuellement d'au moins une solution colloïdale dans laquelle sont dispersés des cristaux de zéolithes de taille nanométrique maximale égale à 300 nm ;
b) l'atomisation par aérosol de ladite solution obtenue à l'étape a) pour conduire à la formation de gouttelettes liquides sphériques ; c) le séchage desdites gouttelettes ; d) l'élimination d'au moins dudit tensioactif.

12. Procédé de préparation selon la revendication 11 dans lequel au moins ledit premier précurseur métallique choisi parmi un premier précurseur monométallique à base de molybdène ou de tungstène, et au moins un deuxième précurseur monométallique à base d'un métal du groupe VIII sont mis en solution préalablement à la mise en oeuvre de ladite étape a), ladite solution étant ensuite introduite dans le mélange selon ladite étape a).

13. Procédé de transformation d'une charge hydrocarbonée comprenant 1) la mise en contact du matériau inorganique mésostructuré selon l'une des revendications 1 à 10 avec une charge comprenant au moins un composé soufré puis 2) la mise en contact dudit matériau issu de ladite étape 1) avec ladite charge hydrocarbonée.

14. Procédé de transformation selon la revendication 13 dans lequel ladite charge comprend des molécules contenant des hétéroéléments choisis parmi l'azote, l'oxygène et/ou le soufre.

## Patentansprüche

1. Anorganisches Material, das von mindestens zwei elementaren sphärischen Partikeln gebildet ist, wobei jeder der sphärischen Partikel metallische Nanopartikel umfasst, die mindestens ein Wellenzahlband zwischen 750 und 1050 cm⁻¹ in Raman-Spektroskopie aufweist, ausgewählt unter Monomolybdän-Gattungen, Monowolfram-Gattungen, Polymolybdän-Gattungen oder Polywolfram-Gattungen, wobei metallischen Nanopartikel in einer mesostrukturierten Matrix auf Oxidbasis mindestens eines Elements Y vorhanden sind, ausgewählt in der Gruppe, die gebildet ist von Silizium, Aluminium, Titan, Zirkon, Gallium, Germanium, Cer und dem Gemisch mindestens zweier dieser Elemente, wobei die Matrix Poren mit einem Durchmesser zwischen 1,5 und 50 nm aufweist und amorphe Wände mit einer Dicke zwischen 1 und 30 nm aufweist, wobei die elementaren sphärischen Partikel einen Maximaldurchmesser von 200 Mikrometern haben, und die metallischen Nanopartikel eine maximale Größe unbedingt unter 1 nm haben, wobei die metallischen Nanopartikel nicht durch Transmissionselektronenmikroskopie (MET) erkannt werden.

2. Material nach Anspruch 1, bei dem die mesostrukturierte Matrix von Aluminiumoxid, Siliziumoxid, einem Gemisch von Siliziumoxid und Aluminiumoxid oder einem Gemisch von Siliziumoxid und Zirkonoxid gebildet ist.

3. Material nach Anspruch 1 oder Anspruch 2, bei dem die Matrix Poren mit einem Durchmesser zwischen 4 und 20 nm aufweist.

4. Material nach einem der Ansprüche 1 bis 3, bei dem die Matrix amorphe Wände mit einer Dicke zwischen 1 und 10 nm aufwiest.

5. Material nach einem der Ansprüche 1 bis 4, bei dem die metallischen Nanopartikel mindestens ein Wellenzahlband zwischen 750 und 950 cm⁻¹ oder zwischen 950 und 1050 cm⁻¹ in Raman-Spektroskopie aufweisen.

6. Material nach einem der Ansprüche 1 bis 5, bei dem jedes der sphärischen Partikel zeolithische Nanokristalle umfasst, die 0,1 bis 30 Gew.-% des Materials darstellen.

7. Material nach Anspruch 6, bei dem die zeolithischen Nanokristalle mindestens einen Zeolithen umfasst, ausgewählt unter den Zeolithen des Strukturtyps MFI, BEA, FAU und LTA.

8. Material nach einem der Ansprüche 1 bis 7, bei dem jeder der sphärischen Partikel ein oder mehrere zusätzliche Elemente umfasst, ausgewählt unter organischen Wirkstoffen, den Metallen der Gruppe VIII des Periodensystems der Elemente und Dopinggattungen, die der Liste der Dopingelemente angehörten, die von Phosphor, Fluor, Silizium und Bor und ihren Gemischen gebildet ist.

9. Material nach Anspruch 8, bei dem das Metall der Gruppe VIII als zusätzliches Element unter Kobalt, Nickel und dem Gemisch dieser zwei Metalle ausgewählt ist.

10. Material nach einem der Ansprüche 1 bis 9, das eine spezifische Oberfläche zwischen 50 und 1100 m²/g aufweist.

11. Verfahren zur Herstellung eines anorganischen Materials nach einem der Ansprüche 1 bis 10, umfassend mindestens die folgenden aufeinanderfolgenden Schritte:
a) Mischen in Lösung
- mindestens eines Tensids,
- mindestens einer Vorstufe mindestens eines Elements Y, ausgewählt unter Silizium, Aluminium, Titan, Zirkon, Germanium, Cer und dem Gemisch mindestens zweier dieser Elemente,
- mindestens einer ersten metallischen Vorstufe, ausgewählt unter einer ersten monometallischen Vorstufe auf Basis von Molybdän und Wolfram,
- eventuell mindestens einer Kolloid-Lösung, in der Kristalle von Zeolithen mit einer maximalen nanometrischen Größe gleich 300 nm dispergiert sind;
b) Atomisieren der in Schritt a) erhaltenen Lösung, um zur Bildung von sphärischen flüssigen Tröpfchen zu führen;
c) Trocknen der Tröpfchen;
d) Entfernung mindestens des Tensids.

12. Herstellungsverfahren nach Anspruch 11, bei dem mindestens die erste metallische Vorstufe ausgewählt ist unter einer ersten monometallischen Vorstufe auf Basis von Molybdän oder Wolfram, und mindestens eine zweite monometallische Vorstufe auf Basis eines Metalls der Gruppe VIII vor dem Einsatz des Schrittes a) gelöst werden, wobei die Lösung dann in das Gemisch nach Schritt a) eingeleitet wird.

13. Verfahren zur Umwandlung einer Kohlenwasserstoffcharge, umfassend 1) das Inkontaktbringen des mesostrukturierten anorganischen Materials nach einem der Ansprüche 1 bis 10 mit einer Charge, umfassend mindestens eine Schwefelverbindung, dann 2) das Inkontaktbringen des Materials aus dem Schritt 1) mit der Kohlenwasserstoffcharge.

14. Umwandlungsverfahren nach Anspruch 13, bei dem die Charge Moleküle umfasst, umfassend Heteroelemente, die unter Stickstoff, Sauerstoff und/oder Schwefel ausgewählt sind.

## Claims

1. An inorganic material constituted by at least two elementary spherical particles, each of said spherical particles comprising metallic nanoparticles having at least one band with a wave number in the range 750 to 1050 cm⁻¹ in Raman spectroscopy selected from monomolybdic species, monotungstic species, polymolybdic species and polytungstic species, said metallic nanoparticles being present within a mesostructured matrix based on an oxide of at least one element Y selected from the group constituted by silicon, aluminium, titanium, zirconium, gallium, germanium, cerium, and a mixture of at least two of these elements, said matrix having pores with a diameter in the range 1.5 to 50 nm and having amorphous walls with a thickness in the range 1 to 30 nm, said elementary spherical particles having a maximum diameter of 200 microns and said metallic nanoparticles having a maximum dimension strictly less than 1 nm, wherein said metallic nanoparticles are not detected in transmission electron microscopy (TEM).

2. The material according to claim 1, in which said mesostructured matrix is constituted by aluminium oxide, silicon oxide, a mixture of silicon oxide and aluminium oxide or a mixture of silicon oxide and zirconium oxide.

3. The material according to claim 1 or claim 2, in which said matrix has pores with a diameter in the range 4 to 20 nm.

4. The material according to one of claims 1 to 3, in which said matrix has amorphous walls with a thickness in the range 1 to 10 nm.

5. The material according to one of claims 1 to 4, in which said metallic nanoparticles have at least one band with a wave number in the range 750 to 950 cm⁻¹ or in the range 950 to 1050 cm⁻¹ in Raman spectroscopy.

6. The material according to one of claims 1 to 5, in which each of the spherical particles comprises zeolitic nanocrystals representing 0.1% to 30% by weight of said material.

7. The material according to claim 6, in which said zeolitic nanocrystals comprise at least one zeolite selected from zeolites with structure type MFI, BEA, FAU and LTA.

8. The material according to one of claims 1 to 7, in which each of the spherical particles comprises one or more additional element(s) selected from organic agents, metals from group VIII of the periodic classification of the elements and doping species belonging to the list of doping elements constituted by phosphorus, fluorine, silicon and boron and their mixtures.

9. The material according to claim 8, in which said metal from group VIII as the additional element is selected from cobalt, nickel and a mixture of these two metals.

10. The material according to one of claims 1 to 9, having a specific surface area in the range 50 to 1100 m²/g.

11. A process for preparing an inorganic material according to one of claims 1 to 10, comprising at least the following steps in succession :
a) mixing in solution:
- at least one surfactant;
- at least one precursor of at least one element Y selected from the group constituted by silicon, aluminium, titanium, zirconium, gallium, germanium, cerium, and a mixture of at least two of these elements;
- at least one first metallic precursor selected among a first monometallic precursor based on molybdenum or tungsten;
- optionally, at least one colloidal solution in which zeolite crystals with a maximum nanometric dimension equal to 300 nm are dispersed;
b) aerosol atomisation of said solution obtained in step a) in order to result in the formation of spherical liquid droplets; c) drying said droplets; d) eliminating at least said surfactant.

12. The preparation process according to claim 11, in which at least said first metallic precursor selected among a first monometallic precursor based on molybdenum or tungsten, and at least one second monometallic precursor based on a metal from group VIII are dissolved prior to carrying out said step a), said solution then being introduced into the mixture in accordance with said step a).

13. A process for the transformation of a hydrocarbon feed, comprising 1) bringing a mesostructured inorganic material according to one of claims 1 to 10 into contact with a feed comprising at least one sulphur-containing compound, then 2) bringing said material obtained from said step 1) into contact with said hydrocarbon feed.

14. A transformation process according to claim 13, in which said feed comprises molecules containing heteroelements selected from nitrogen, oxygen and/or sulphur.
